(19) Europäisches Patentamt
European Patent Office
Office européen des brevets

(11) EP 4 563 631 A1

(12) EUROPEAN PATENT APPLICATION

(43) Date of publication:
**04.06.2025 Bulletin 2025/23**

(21) Application number: **23315445.9**

(22) Date of filing: **30.11.2023**

(51) International Patent Classification (IPC):
***C08J 9/00*** *(2006.01)* ***C08J 9/12*** *(2006.01)*
***C08J 9/18*** *(2006.01)*

(52) Cooperative Patent Classification (CPC):
(C-Sets available)
**C08J 9/0038; C08J 9/0023; C08J 9/0028; C08J 9/0033; C08J 9/122; C08J 9/18; C08K 5/5317;** C08J 2203/06; C08J 2323/00
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **JSP International SARL
60190 Estrées-Saint-Denis (FR)**
- **JSP Corporation
Tokyo 100-0005 (JP)**

(72) Inventors:
- **VÉDIE, Laurianne
60190 Estrées-Saint-Denis (FR)**
- **KOPF, Valentin
60190 Estrées-Saint-Denis (FR)**
- **HIRA, Akinobu
Tokyo 100-0005 (JP)**
- **DILGER, Melvin
59800 Lille (FR)**
- **JIMENEZ, Maude
59800 Lille (FR)**
- **BELLAYER, Séverine
59211 Santes (FR)**
- **DUQUESNE, Sophie
59350 Saint André Lez Lille (FR)**

(74) Representative: **Hafner & Kohl PartmbB
Schleiermacherstraße 25
90491 Nürnberg (DE)**

# (54) POLYOLEFIN-BASED RESIN FOAMED PARTICLES, A COMPONENT MOLDED FROM THE FOAMED PARTICLES, A METHOD FOR PRODUCING THE FOAMED PARTICLES, AND A METHOD OF DETERMINING THE FLAME-RETARDING PROPERTIES OF FOAMED PARTICLES

(57) The invention relates to polyolefin-based resin foamed particles, wherein the foamed particles comprise a polyolefin-based resin and a phosphonate ester compound, a component molded from the foamed particles, a method for producing the foamed particles, and a method for determining the flame-retarding properties of foamed particles.

EP 4 563 631 A1

(52) Cooperative Patent Classification (CPC): (Cont.)

C-Sets
**C08K 5/5317, C08L 23/02**

## Description

The invention relates to polyolefin-based resin foamed particles, a component molded from the foamed particles, a method for producing the foamed particles, and a method for determining the flame-retarding properties of foamed particles.

Respective polyolefin-based resin foamed particles which comprise a polyolefin-based resin and a phosphonate ester compound are generally known from prior art. The phosphonate ester compound of respective foamed particles typically, provides a specific function. Particularly, the phosphonate ester compound of respective foamed particles typically, provides a flame retardancy function. The phosphonate ester compound can thus, be or form part of a flame-retardant material which provides the polyolefin-based resin foamed particles with flame retarding properties.

Respective flame retarding properties can be required for diverse components, particularly technical components, molded from respective polyolefin-based resin foamed particles. As non-limiting examples, molded components molded from respective polyolefin-based resin foamed particles for applications in vehicles, particularly for cars, regularly require good flame retardancy. More concrete, yet non-limiting examples of respective vehicle components molded from respective polyolefin-based resin foamed particles which require good flame retardancy are housing elements and protection elements for battery devices, electric devices, electronic devices, etc.

As such, when producing respective polyolefin-based resin foamed particles it is of high importance that the phosphonate ester compounds are not substantially altered or degraded to assure that the resulting polyolefin-based resin foamed particles still have the desired properties due to a sufficiently high amount of unaltered/undegraded phosphonate ester compound. Particularly, the pressure and temperature conditions for producing respective polyolefin-based foamed particles can, especially when combined with the presence of (super)heated water for a long time as is the case in conventional autoclave-processes, cause undesired altering or degradation of the phosphonate ester compound which results in that the polyolefin-based resin foamed particles do not exhibit the desired properties, particularly with respect to flame-retardancy.

Experiments have shown that particularly, hydrolysis of the phosphonate ester compound, which can occur during autoclave-based processes for producing respective polyolefin-based resin foamed particles in the presence of water, can negatively affect the properties of polyolefin-based resin foamed particles. Particularly, desired flame-retarding properties cannot be achieved when the phosphonate ester compound undergoes hydrolysis or similar degradation processes during the process for producing the respective polyolefin-based resin foamed particles.

Hence, it is an object of the invention to provide polyolefin-based resin foamed particles having improved properties, the improved properties particularly based on a high degree of unaltered and undegraded phosphonate ester compound after the production process of the polyolefin-based resin foamed particles. It is another object of the invention to provide a molded component comprising such polyolefin-based resin foamed particles having improved properties and a method for producing such polyolefin-based resin foamed particles having improved properties.

The object is achieved by the subject-matter of the independent claims. The subject-matter of the claims depending therefrom relates to possible embodiments of the subject-matter of the independent claims.

A first aspect of the invention relates to polyolefin-based resin foamed particles, hereinafter briefly referred to as "the foamed particles". The foamed particles typically, have an expanded cellular structure, particularly an expanded cellular structure which is further expandable. The cellular structure of each of the foamed particles typically, comprises walls defining one or more cellular spaces. When no additional cover layer or the like is provided on the foamed particles, the entire particle usually becomes or represents the foam layer. When a cover layer or the like is provided on the foamed particles the foam layer becomes or represents the core layer of the respective foamed particles. The cover layer of the foamed particles is preferably a substantially non-foam resin layer. In the case where the cover layer of the foamed particles is foamed, there is a possibility that the mechanical strength of a component molded from the foamed particles is decreased. The foamed particles can also be deemed or denoted "cellular beads" or "expanded beads", respectively.

The foam layer is typically based on a polyolefin-based resin. The term "polyolefin-based resin" particularly refers to polypropylene resin, polyethylene resin, and a mixture of two or more kinds thereof.

Examples of polypropylene resins can include polypropylene homopolymer and propylene-based copolymers containing 50 wt.-% or more of propylene monomers.

Propylene resins such as isotactic polypropylene, syndiotactic polypropylene, and atactic polypropylene are non-limiting examples of propylene homopolymer. These resins exemplified as propylene homopolymer may be used alone or in a mixture of two or more resins.

In said propylene-based copolymers, the content of propylene monomer in the polypropylene resin is preferably 80 wt.-% or more, and more preferably 90 wt.-% or more. The content of propylene monomer in said polypropylene copolymers is preferably 99 wt.-% or less, and more preferably 98 wt.-% or less.

Examples of propylene-based copolymers are copolymers of propylene and at least one of ethylene and/or of alpha-olefins with carbon numbers from 4 to 20. Examples of said $\alpha$-olefins are 1-butene, 1-pentene, 1-hexene, 1-octene and 4-methyl-1-butene. 1-butene, 1-pentene, 1-hexene, 1-octene, 4-methyl-1-butene and the like. Particularly preferred

are ethylene-propylene random copolymers, propylene-butene random copolymers, ethylene-propylene-butene random copolymers.

These propylene-based copolymers, for example, can be random copolymers or block copolymers, but random copolymers are preferred. Examples of said propylene-based copolymers include impact-resistant polypropylene (block polypropylene), which is composed of two or more phases including a continuous phase of propylene polymer and a rubber phase such as ethylene-$\alpha$-olefin copolymer existing as a dispersed phase within the continuous phase.

Mixtures of two or more of these propylene-based copolymers are also conceivable as the main polymeric component (or in mixtures with other resins) of the foam layer. In this case, it is preferred that the proportion of these propylene copolymers in the polypropylene resin is 60 wt.- % or more, 70 wt.-% or more, or even 80 wt.-% or more.

When propylene-based random copolymers contain ethylene-derived components (ethylene component) and/or butene-derived components (butene component) as co-monomers, the in-mold formability of the foamed particles under low molding pressure conditions can be further improved.

If the polypropylene resin comprises ethylene and butene, the total amount of the ethylene and butene is particularly between 1 and 15 wt.-%, more particularly between 2 and 15 wt.-%, more particularly between 3 and 15 wt.-%. In such a manner it is possible to obtain, by molding the foamed particles in a mold, a component having good mechanical properties such as e.g. compressive strength while having a good in-mold formability of the foamed particles under low molding pressure conditions. The respective amount of ethylene and further components in a respective propylene-based random copolymer can be determined by IR spectral measurements.

The polypropylene resin may be a linear polypropylene resin, a branched polypropylene resin, or a combination of both.

Examples of polyethylene resin can include polyethylene homopolymers and ethylene-based copolymers containing more than 50% by mass of ethylene monomer. Specifically, polyethylene-based resins include high-density polyethylene (HDPE), medium-density polyethylene (MDPE), low-density polyethylene (LDPE) and linear low-density polyethylene (LLDPE), linear ethylene copolymers such as ethylene-vinyl acetate (EVA) copolymer and ethylene methyl acrylate (EMA) copolymer. Among these, LLDPE, which is a copolymer of ethylene and $\alpha$-olefin exhibiting a linear shape, is particularly preferred. Examples of suitable LLDPE include ethylene-1-butene copolymer, ethylene-1-pentene copolymer, ethylene-1-hexene copolymer, ethylene-4-methyl-1-pentene copolymer, and ethylene-1-octene copolymer. The linear low-density polyethylene is preferably a random copolymer or a block copolymer, more preferably a random copolymer. The ethylene monomer content of such ethylene copolymers is preferably 80 wt-% or more, 90 wt-% or more, more preferably 95 wt-% or even more preferably 98 wt-% or more.

The method of producing the polyolefin resin is not particularly limited and catalyst systems such as Ziegler-Natta based polymerization catalyst or metallocene-based polymerization catalysts or other catalyst systems are conceivable.

The polymeric material constituting the foam layer in the present invention can contain other polymers other than the aforementioned polyolefin-based resin to the extent that it does not interfere with the purpose and effect of the present invention. Said other polymeric materials are preferably thermoplastic polymers, and more specifically, thermoplastic resins other than polyolefin-based resins, such as polystyrene-based resins, polyamide-based resins, polyester-based resins, polycarbonate-based resins, modified polyphenylene ether-based resins, and the like. Thermoplastic elastomers such as olefinic thermoplastic elastomers (TPO) and urethane thermoplastic elastomers (TPU) can also be included as other polymers mentioned above. A mixture of at least two of these examples of other polymeric materials can also be conceived.

It is preferable that the content of other thermoplastic polymers other than said polyolefin-based resin in the polymeric material constituting the foam layer is 20 wt.-% or less by mass, with 10 wt.-% or less by mass being more preferable, 5 wt.-% or less by mass being even more preferable, and 0 wt.-% mass being particularly preferable. In other words, it is particularly preferred that the foam layer contains substantially only polyolefin resin as the thermoplastic polymer.

Thermoplastic polymers usually exhibit a flexural modulus of 100 MPa or higher. From the viewpoint of improving the moldability of foamed particles, the flexural modulus of thermoplastic resins is preferably less than 3000 MPa, more preferably less than 2000 MPa, even more preferably less than 1500 MPa. On the other hand, thermoplastic elastomers exhibit rubber elasticity at room temperature and usually show a flexural modulus of less than 100 MPa. The flexural modulus of thermoplastic polymers is determined based on JIS K7171:2008. From the viewpoint of excellent balance between moldability and physical properties of the foamed particles, thermoplastic resin is preferred as the polymer constituting the foam layer.

The foam layer in the present invention may contain non-thermoplastic polymers other than the thermoplastic polymers mentioned above. Examples of non-thermoplastic polymers include thermosetting resins and rubbers.

When a non-thermoplastic polymer is contained in the foam layer, it is preferable that the content of the non-thermoplastic polymer in said foam layer 20 wt.-% or less by mass, with 10 wt.-% or less by mass being more preferable, 5 wt.-% or less by mass being even more preferable, and 0 wt.-% mass being particularly preferable. In other words, when other polymers other than polyolefin resins are included in the foam layer, said other polymers are preferably thermoplastic

polymers.

When the polyolefin resin is a polypropylene-based resin, the melting point of the polypropylene-based resin is particularly 130°C or higher, more particularly 135°C or higher, more particularly 140°C. Respective melting points typically, enable obtaining, by molding the foamed particles in a mold, a component having good mechanical properties such as e.g. compressive strength. On the other hand, the melting point of the polypropylene resin is particularly 155°C or less, more particularly 150°C or less, and even more particularly 148°C or less to enable a molding process of the foamed particles under low molding pressure conditions. In other words, the melting point of the polypropylene-based resin is preferably between 130°C to 155°C, more preferably between 135°C to 150°C and even more preferably between 140°C to 148°C.

When the polyolefin resin is a polyethylene-based resin, the melting point of the polyethylene-based resin is particularly 110°C or higher. If the melting point of the polyethylene-based resin is higher than 110°C, the molded product will be less prone to shrinkage and present a good shape recovery after molding. From the viewpoint of further improving moldability, the melting point of the polyethylene-based resin is preferably 112°C or higher, more preferably 115°C or higher. If the melting point of the polyethylene-based resin is lower than 130°C, molding at a low molding temperature will be possible with good fusion adhesion and enhanced moldability. From the viewpoint of further improving moldability, the melting point of the polyethylene-based resin is preferably 128°C or lower, more preferably 125°C or lower. In other words, the melting point of the polyethylene-based resin is preferably between 110°C and 130°C, more preferably between 112°C and 128°C, and even more preferably between 115°C and 125°C.

The melting point of the polyolefin-based resin can be measured in accordance with JIS K 7121:2012 using a polyolefin resin particle as test sample. The test sample is subjected to a nitrogen inflow rate of 30 mL/min. After heating from 23°C to 200°C at a heating rate of 10°C/min, the test sample is kept at that temperature for 10 min, cooled to 23°C at a cooling rate of 10°C/min and then heated again to 200°C at a heating rate of 10°C/min to obtain a, differential scanning calorimetry, DSC, curve (DSC curve for the second heating). The apex temperature of the melting peak in the DSC curve is then determined and this value is used as the melting point of the polyolefin-based resin. If multiple melting peaks appear in the DSC curve, the apex temperature of the melting peak with the highest melting peak height with reference to the baseline is used as the melting point. Respective DSC-measurements can be carried out in accordance with Japanese standard JIS K 7122-2012.

The melt mass-flow rate, MFR, of the polypropylene-based resin measured at a temperature of 230°C and a load of 2.16 kg is particularly 3 g/10 min or more, more particularly 4 g/10 min or more. These values provide good foamability of the foamed particles during foaming and the secondary foamability of the foamed particles during in-mold forming. On the other hand, the MFR of the polyolefin-based resin can be 15 g/10 min or less, and more particularly 10 g/10 min or less. These values improve the uniformity of the foamed particles and the physical properties of a component made therefrom by molding. In other words, the MFR of the polyolefin-based resin is preferably from 3 to 15 g/10 min, and more preferably from 4 to 10 g/10 min.

The melt mass-flow rate, MFR, of the polyethylene-based resin measured at a temperature of 190°C and a load of 2.16 kg is particularly 0.5 g/10 min or more, more particularly 0.8 g/10 min or more. These values provide good foamability of the foamed particles during foaming and the secondary foamability of the foamed particles during in-mold forming. On the other hand, the MFR of the polyolefin-based resin can be 4 g/10 min or less, and more particularly 3 g/10 min or less. These values improve the uniformity of the foamed particles and the physical properties of a component made therefrom by molding. In other words, the MFR of the polyethylene-based resin is preferably from 0.5 to 4 g/10 min, and more preferably from 0.8 to 3 g/10 min.

The MFR of the polyolefin-based resin can be determined by using polyolefin resin particles as test specimens in accordance with JIS K 7210-1:2014. The MFR can be measured with a MFR-measurement device available from Dynisco, 38 Forge Parkway, Franklin MA 02038, USA, under the name "LMI400", for instance.

The foamed particles can have a (substantially) spherical shape.

The average particle size of the foamed particles is particularly between 0.3 - 8 mm, more particularly between 0.5 - 5 mm and even more particularly between 0.8 - 4.5 mm. The average particle size of the foamed particles is a value which can be determined by the following method: First, based on the volume-based particle size distribution of the foamed particles, the particle size distribution based on the number of foamed particles is obtained by assuming the shape of the foamed particles as a sphere and converting it to a number-based particle size distribution. Then, by arithmetic averaging the particle diameters based on this particle size distribution, the arithmetic mean particle diameter based on the number of foamed particles can be obtained. The above particle diameter means the diameter of a virtual sphere having the same volume as the particle. The particle size distribution of the foamed particles on a volume basis can be measured using a particle size distribution measuring device (e.g. the Millitrac JPA available from Nikkiso Co. Ltd., Japan). The number of foam foamed particles used for the measurement should be, for example, 2000 or more.

The average cell diameter of the foamed polyolefin-based foamed particles can range between 50 μm and 250 μm, particularly between 60 μm and 200 μm, more particularly between 65 μm and 150 μm, for instance. The aforementioned cell diameter values typically, improve in-mold foamability of the foamed particles when molding

components therefrom. The average cell diameter can be measured by drawing a line segment from the outer edge of the bubble located on the most surface side of the foam particle to the outer edge of the bubble located on the opposite most surface side through the center in an image, e.g. provided from a microscope, of a cross-section of a particle divided into two parts, and dividing the number of cells that intersect the line segment by the length of the line segment. The average cell diameter can be brought to the desired range by adjusting the type and amount of a cell size regulating agent which has been added to the foamed particles and the pressure during foaming of the foamed particles.

The foamed particles thus, generally represent a polyolefin-based particulate material comprising polyolefin-based foamed particles having an expanded cellular structure, particularly an expanded cellular structure which is further expandable. The expressions "polyolefin-based resin foamed particles" and "polyolefin-based particulate material" can be interchangeably used herein.

The foamed particles comprise a polyolefin-based resin and a phosphonate ester compound, particularly a cyclic phosphonate ester compound. The polyolefin-based resin can be based on a polyethylene resin, a polypropylene resin, or a combination of a polyethylene resin and a polypropylene resin, for instance. The polyolefin-based resin can form a matrix for the phosphonate ester compound. Particularly, the polyolefin-based resin can form a matrix which contains the phosphonate ester compound. This applies to each particle of the foamed particles. In other words, each particle is made of a polyolefin-based resin and comprises a phosphonate ester compound, wherein the polyolefin-based resin, particularly, forms a respective matrix for the phosphonate ester compound. Examples of respective phosphonate ester compounds are provided further below.

The phosphonate ester compound can have a specific function and thus, can provide the foamed particles with specific properties. Particularly, the phosphonate ester compound can have a flame-retarding function and can thus, provide the foamed particles with flame-retarding properties.

The phosphonate ester compound can thus, be or form part of flame-retardant agent. Particularly preferred phosphonate ester compounds are cyclic phosphonate compounds.

The foamed particles are improved because they contain only a little amount of altered or degraded phosphonate ester compound. Altering or degrading, a respective phosphonate ester compound particularly refers to the chemical structure of the phosphonate ester compound. As an example, the chemical structure of the phosphonate ester compound can be turned into phosphonic acids through hydrolysis. Experimental results have shown that the foamed particles follow the following equation which is a reliable indicator if the amount of altered or degraded phosphonate ester compound is below a threshold which means that the foamed particles have the desired properties, particularly with respect to flame retardancy, or if the amount of altered or degraded phosphonate ester compound is above a threshold which means that the foamed particles do not have the desired properties, particularly with respect to flame retardancy.

As such, one characteristic of the foamed particles is that they satisfy the following equation:

$$\{[m_{215} - m_{235}] / m_{215}\} \times 100/P_{tot} \leq 35;$$

wherein

$m_{215}$: is the mass of the foamed particles as measured in a thermogravimetric measurement at 215°C;
$m_{235}$: is the mass of the foamed particles as measured in a thermogravimetric measurement at 235°C; and
$P_{tot}$: is a numerical weight value of the total phosphorus content of the foamed particles ranging between 0.001 to 0.06.

The inventors found out that one can at least qualitatively determine or evaluate the amount of altered or degraded phosphonate ester compound and thus, the amount of unaltered and undegraded phosphonate ester compound, respectively in the foamed particles based on thermogravimetric measurements resulting from thermogravimetric analyses of the foamed particles. Particularly, the inventors found out that the amount of altered or degraded phosphonate ester compound and thus, the amount of unaltered and undegraded phosphonate ester compound in the foamed particles can be at least qualitatively determined or evaluated by mathematically relating results from thermogravimetric analyses of the foamed particles with a specific total phosphorus content of the foamed particles which ranges in between 0.1 to 6 weight-%, wt.-%, relative to the weight of the foamed particles, and then determining if this relation is equal to or below a value of 35. As is apparent from the above equation, particularly results from thermogravimetric analyses of the foamed particles at 215°C and 235°C are to be used by subtracting the determined mass of foamed particles measured in a thermogravimetric measurement at 215°C from the mass of foamed particles measured in a thermogravimetric measurement at 235°C, dividing this result by the mass of the foamed particles measured in a thermogravimetric measurement at 215°C, multiplying the result by the expression "$100/P_{tot}$", wherein $P_{tot}$ relates to a numerical weight value of the total phosphorus content of the foamed particles ranging 0.001 and 0.06, and checking if the result is equal to or below a value of 35. The total phosphorus content of the foamed particles and its respective numerical

value $P_{tot}$ are specifically selected to take into account the phosphorus content of the unaltered phosphonate ester compound, the phosphorus content of altered/degraded phosphonate ester compounds, and the phosphorus content of all phosphorous substances resulting therefrom.

The measurement temperatures of 215°C and 235°C, respectively have been found useful because if the lower measurement temperature was selected lower, then there could be the effect of remaining water in the foamed particles while if the upper measurement temperature was selected higher, then there could be effects of the degradation of the phosphonate ester. In both cases, potential further effects would have reduced the precision of the thermogravimetric measurement because of different degradation mechanisms and/or thermodynamical mechanisms happening in parallel.

Experimental results have surprisingly and reliably shown that the foamed particles show good flame-retardancy, particularly improved flame retardancy relative to conventional foamed particles, when the foamed particles satisfy the equation and thus, when the result is equal to or below a value of 35, particularly equal to or below a value of 34, more particularly equal to or below a value of 33, particularly equal to or below a value of 32, particularly equal to or below a value of 31, particularly equal to or below a value of 30, particularly equal to or below a value of 29, particularly equal to or below a value of 28, particularly equal to or below a value of 27, particularly equal to or below a value of 26, particularly equal to or below a value of 25, particularly equal to or below a value of 24, particularly equal to or below 23, particularly equal to or below a value of 22, particularly equal to or below 21, particularly equal to or below a value of 20, particularly equal to or below a value of 19, particularly equal to or below a value of 18, particularly equal to or below a value of 17, particularly equal to or below a value of 16, particularly equal to or below a value of 15, particularly equal to or below a value of 14, particularly equal to or below a value of 13, particularly equal to or below a value of 12, particularly equal to or below a value of 11, particularly equal to or below a value of 10, particularly equal to or below a value of 9, particularly equal to or below a value of 8, particularly equal to or below a value of 7, particularly equal to or below a value of 6, particularly equal to or below a value of 5. The aforementioned ranges can also represent thresholds for intervals; as examples, the value can range between 5 and 35, or between 7 and 29, or between 16 and 24, etc. Generally, experimental results have surprisingly shown that the foamed particles show good flame-retardancy when the value ranges between 5 and 35.

The foamed particles which satisfy the equation can meet at least one of the following UL94 rating classifications: HB-F, HF-2, HF-1, V-2, V-1, V-0. The foamed particles which satisfy the equation can also exhibit good flammability properties according to other flammability standards.

The thermogravimetric measurements for determining the mass of the foamed particles as measured in a thermogravimetric measurement at 215°C and 235°C, respectively can be carried out with grinded samples of ca. 15 mg using a single measurement program comprising a temperature ramp starting at 40°C and ending at 800°C and a heating rate of 10°C/min under an inert gas atmosphere, e.g. a 100% nitrogen atmosphere. The thermogravimetric measurements for determining the mass of the foamed particles as measured in a thermogravimetric measurement at 215°C and 235°C, respectively can be performed with a thermogravimetric analysis device which is available from Mettler-Toledo GmbH, 35396 Gießen, Germany, under the name "TGA 2" with a "Microbalance XP5" which is also available form Mettler-Toledo GmbH. Similar thermogravimetric analysis devices can generally be used as well. The grinding of the samples prior analysis can be performed with a cryogenic centrifugal grinder which is available from Retsch GmbH, Retsch-Allee 1-5, 42781 Haan, Germany, under the name "Ultra Centrifugal Mill ZM 200".

The measurements for determining the total phosphorus content of the foamed particles can be carried out with an ICP-OES spectrometer. The measurements for determining the total phosphorus content of the foamed particles can be carried out with test samples having a weight of 0.1 g $\pm$ 0.1 mg. A solution of a test sample with 6 ml of concentrated nitric acid can be provided in a closed tetrafluoromethoxyl reactor which is placed in a microwave oven for mineralization of the sample. The conditions of use of the microwave mineralizer can be carried out using a measurement program comprising a heating cycle from room temperature to 220°C in 30 min, then maintaining the temperature constant for 20 min to effect mineralization. At the end of mineralization, the solutions are transferred to a 50 ml volumetric flask by rinsing the reactor with milli-Q water, then making up the volume and homogenizing. Depending on the total phosphorus content of the samples, the solutions obtained are diluted to different volumes before being transferred to the ICP-OES spectrometer for determining the total phosphorus content. The ICP-OES spectrometer is available from HORIBA Europe GmbH, 61440 Oberursel, Germany, under the name "Activa M". Similar ICP-OES spectrometers can generally be used as well.

Optionally, the above equation can consider an offset coefficient, OC, when the foamed particles comprise a very low total phosphorus content, e.g. less than 1%. The offset coefficient takes into account that also a part of the polyolefin-matrix can thermally degrade during the measurement when heated from 215°C to 235°C. As an example, studies have shown that polyolefins can lose at around 0.03% of their mass during the measurement when heated from 215°C to 235°C. An exemplary offset coefficient can thus, in numerical values, range between 0.0001 and 0.0005, particularly between 0.0002 and 0.0004, particularly at 0.0003. In the above equation, the offset coefficient could be mathematically subtracted so that:

$$[\{[m_{215} - m_{235}] / m_{215}\} - OC\ ]\ x\ 100/P_{tot} \leq 35.$$

Typically, the use of an offset coefficient, OC, is not necessary for foamed particles comprising a total phosphorus content above 1% because such an offset coefficient is negligible compared to the weight loss relative the degraded phosphonate ester compound.

Particularly, the total phosphorus content of the foamed particles can range between 1 and 4.8 wt.-%, particularly between 1.5 and 4.8 wt.-%, more particularly between 1.8 and 4.8 wt.-%. It is particularly preferred that the total phosphorus content ranges in between 1.8 and 4.4 wt.-%, even more preferred in between 1.8 and 3.6 wt.-%. In such embodiments, the $P_{tot}$-value would be between 0.01 to 0.048, particularly between 0.015 and 0.048, more particularly between 0.018 and 0.048, or between 0.018 and 0.044 and 0.018 and 0.036, respectively.

When the total phosphorus content is within the aforementioned range, the foamed particles have good properties, particularly with respect to a desired flame retardancy.

In exemplary embodiments, the foamed particles can further contain a NOR-type hindered amine compound. The NOR-type hindered amine compound can also be or form part of a flame retarding agent and thus, can affect the flame-retarding properties of the foamed particles. The NOR-type hindered amine compound is an example of a respective additive mentioned before. The amount of the NOR-type hindered amine compound in the foamed particles can range between 0.1 and 5 wt.-%, particularly between 0.3 and 4 wt.-%, more particularly between 0.5 and 3 wt.-%. When the amount of NOR-type hindered amine compound in the foamed particles is less than 3 wt.-%, it is possible to obtain particles with good fusion bonding properties.

Particularly, the total phosphorus content of the foamed particles can range between 1 and 4.8 wt.-% and the amount of the NOR-type hindered amine compound can range between 0.1 and 5 wt.-%.

In exemplary embodiments, the total amount of the polyolefin-based resin in the foamed particles is at least 80 wt.-%. It is particularly preferred that the total amount of the polyolefin-based resin in the foamed particles is greater than 82 wt.-%, even preferred greater than 85 wt.-%. When the total amount of the polyolefin-based resin is greater than the aforementioned thresholds, it is possible to produce foamed particles with excellent flame retardancy and good fusion bonding properties with relatively low amount of flame-retardant agents.

In further exemplary embodiments, the foamed particles further contain a phenolic antioxidant. The phenolic antioxidant is another example of a respective additive mentioned before. The amount of the phenolic antioxidant in the foamed particles compound can range between 0.01 and 0.5 wt.-%, particularly between 0.02 and 0.3 wt.-%, more particularly between 0.03 and 0.2 wt.-%. Particularly, the total phosphorus content of the foamed particles can range between 1 and 4.8 wt.-% and the amount of the phenolic antioxidant can range between 0.01 and 0.5 wt.-%.

In such embodiments in which the foamed particles further contain a NOR-type hindered amine and a phenolic antioxidant, the ratio of the amount of phenolic antioxidant to the amount of NOR-type hindered amine compound in the foamed particles can range between 0.03 to 0.9, particularly between 0.07 and 0.9, more particularly between 0.14 and 0.9.

In exemplary embodiments, the phosphonate ester compound can be or comprise a cyclic phosphonate compound represented by the following general formula (1):

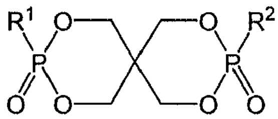

wherein R1 and R2 can each represent a hydrocarbon group, particularly wherein R1 and R2 can each represent a methyl-group.

As a concrete, yet non-limiting example, the phosphonate ester compound can be or form part of the flame-retardant agent which is available from Thor GmbH, 67329 Speyer, Germany, under the name "Aflammit PCO 900".

In formula (1), R1 and R2 can be the same or different and are preferably identical. Particularly, R1 is an alkyl group with 1-10 carbons, an alkenyl group with 2-10 carbons, a benzyl group, a phenylethyl group, a phenyl group or a naphthyl group, preferably an alkyl group with 1 or 2 carbons, more preferably a methyl group. Particularly, R2 is an alkyl group with 1-10 carbons, an alkenyl group with 2-10 carbons, a benzyl group, a phenylethyl group, a phenyl group or a naphthyl group, preferably an alkyl group with 1 or 2 carbons, more preferably a methyl group.

Generally, the phosphonate ester compound can be a compound containing one or more cyclic phosphonate moieties in the molecule, preferably selected from the group consisting of compounds represented by the following general formula (1) as shown above, compounds represented by the following general formula (2), compounds represented by the following general formula (3), and compounds represented by the following general formula (4). Pentaerythritol diphosphonates of formula (1) as shown above are spirocyclic compounds, containing two cyclic

phosphonate moieties in the molecule. One cyclic phosphonate compound may be used alone or in combination of two or more.

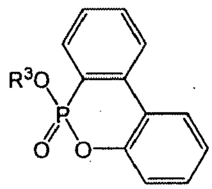

(2)

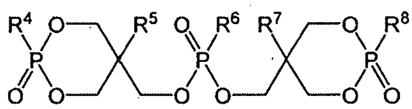

(3)

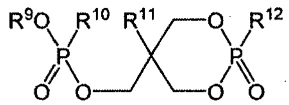

(4)

R4, R8, R9, and R12 can comprise 1 - 4 alkyl groups; R5 and R7 can each comprise a hydrogen atom or a 1-4 alkyl group, R6 and R10 can each comprise -a 1-22 alkyl group, a 9-22 cycloalkyl group, a 9-22 aryl group or a 9-22 aralkyl group.

In formula (2) R3 can be an alkyl group with 1 to 22 carbons or an aryl group with 6 to 15 carbons, preferably a phenyl group.

In formula (3), R4 and R8 can be the same or different and are preferably identical. Particularly, R4 is an alkyl group with 1-4 carbons, preferably a methyl group. Particularly, R8 is an alkyl group with 1-4 carbons, preferably a methyl group. Particularly, R5 and R7 can be the same or different and are preferred to be identical. Particularly, R5 is a hydrogen atom or an alkyl group with 1-4 carbons, preferably an ethyl group. Particularly, R7 is a hydrogen atom or an alkyl group with 1-4 carbons, preferably an ethyl group. Particularly, R6 is an alkyl group with 1-22 carbons, a cycloalkyl group with 9-22 carbons, an aryl group with 9-22 carbons or an aralkyl group with 9-22 carbons, preferably a linear alkyl group with 1-12 carbons.

In formula (4), R9 and R12 may be the same or different and are preferably identical. Particularly, R9 is an alkyl group with 1-4 carbons, preferably a methyl group. Particularly, R12 is an alkyl group with 1-4 carbons, preferably a methyl group. Particularly, R10 is an alkyl group with 1-22 carbons, a cycloalkyl group with 9-22 carbons, an aryl group with 9-22 carbons or an aralkyl group with 9-22 carbons, preferably a linear alkyl group with 1-12 carbons. Particularly, R11 is a hydrogen atom or an alkyl group with 1-4 carbons, preferably an ethyl group.

The melting point of the phosphonate ester compound can range between 200 and 300°C. The melting point of the phosphonate ester compound can be measured according to JIS K 0064:1992.

As indicated above, the NOR-type hindered amine compound can also be or form part of a flame retarding agent. The flame retarding properties of the foamed particles can be improved when the NOR-type hindered amine compound is or comprises a 2, 2, 6, 6-tetramethyl-4-piperidineamine moiety having a hydrocarbon group bonded via an oxygen atom to the nitrogen atom shown in below formula (5):

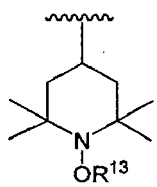

(5)

wherein: R13 represents a hydrogen carbon group.

When two or more hindered amine parts represented by formula (5) are included in one molecule of NOR-type hindered amine, the plurality of R13 can be identical or different, but it is preferred that the plurality of R13 are identical.

R13 is preferably at least one selected from the group consisting of alkyl groups and cycloalkyl groups, more preferably cycloalkyl groups. When R13 is an alkyl group, R13 is more preferably an alkyl group with 1-20 carbons, more preferably an undecyl group.

When R13 is a cycloalkyl group, R13 is more preferably a cycloalkyl group with a carbon number of 4-10, more

preferably a cyclohexyl group.

A NOR-type hindered amine compound may be used alone or in combination of two or more.

The molecular weight of said NOR-type hindered amine compound is preferably 600 g/mol or more, more preferably 1500 g/mol or more. As such, so-called bleed-outs of a component made from the foamed particles by molding can be inhibited. To achieve good dispersion of the NOR-type hindered amine compound in the polyolefin-based resin, the molecular weight of said NOR-type hindered amine compound is preferably less than 3000 g/mol, and more preferably less than 2500 g/mol.

The number of 2, 2, 6, 6-tetramethyl-4-piperidine amine moieties having a hydrocarbon group bonded via an oxygen bond on the nitrogen represented by above formula (5) in said NOR-type hindered amine compound is preferably from 2 to 8, more preferably from 2 to 6, more preferably 2 or 6.

A concrete example of a NOR-type hindered amine compound is available from BASF Japan Ltd., Tokyo, Japan under the name "Flamestab NOR 116".

The phenolic antioxidant can be antioxidants having one or more phenol structures in the molecule with one or more hydroxyl groups bonded on the aromatic ring, preferably having two or more phenol structures in the molecule, more preferably having three or more phenol structures in the molecule. At high temperatures (e.g. 180°C or higher), such as in the process of melting and kneading polyolefin-based resins, decomposition of the polyolefin-based resin can occur in a relatively short time, and the phenolic antioxidant described above is a compound that inhibits decomposition of the polyolefin-based resin at such high temperatures and in such a short time. Specific examples of phenolic antioxidants are 1, 3, 5-trimethyl-2, 4, 6-tris(3', 5'-di-t-butyl-4 '-hydroxybenzyl)benzene, 2, 6-di-butyl-p-cresol, tri-ethylene glycol bis[3-(3-t-butyl-5-methyl-4-hydroxyphenyl) propionate], 2, 2-methylenebis(4-methyl-6-tbutylphenol), 1, 6-hexanediol-bis[3-(3,5-di(-t-butyl-4-droxyphenyl)propionate], pentaerythritol tetrakis[3-(3,5-di-tert-butyl-4-hydroxyphenyl) propionate], etc. These may be used alone or in combination of two or more.

The melting point of the phenolic antioxidant is preferably between 50°C and 350°C to obtain a component, via molding of the foamed particles, having higher flame retardancy. More preferably, the melting point of the phenolic antioxidant ranges between 100°C and 330°C, even more preferably between 150°C and 320°C, and even more preferably between 200°C and 300°C The melting point of the phenolic antioxidants can be measured according to JIS K 0064:1992.

The difference between the melting point of the phenolic antioxidant and the melting point of the phosphonate ester compound can be between -150°C and 150°C, preferably between -100°C and +100°C, even more preferably between -50°C and +50°C. When the difference between the melting point of the phenolic antioxidant and the melting point of the phosphonate ester compound is in the aforementioned ranges, it is possible to obtain a foam particle body with improved flame resistance.

As indicated above, in such embodiments in which the foamed particles further contain a NOR-type hindered amine and a phenolic antioxidant, the ratio of the amount of phenolic antioxidant to the amount of NOR-type hindered amine compound in the foamed particles can range between 0.03 to 0.9, particularly between 0.07 and 0.9, more particularly between 0.14 and 0.9.

It is specifically, believed that the aforementioned ratios are beneficial for the following reasons: The NOR-type hindered amine compound is considered to provide high flame retardancy when used in combination with phosphonate ester compounds. However, if a large amount of NOR-type hindered amine compounds is contained in the foamed particles, the fusion adhesion of a component made from the foamed particles tends to deteriorate. On the other hand, if the amount of NOR-type hindered amine compounds is too small, it is difficult to impart higher flame retardancy to a respective component made from the foamed particles. Hence, by using phenolic antioxidants in combination with NOR-type hindered amine compounds in specific amounts and in specific ratios, high flame resistance can be imparted to a respective component even in the range where the amount of NOR-type hindered amine compounds is low. By combining a phenolic antioxidant with a NOR-type hindered amine compound in a specific amount,and in a specific ratio as described above, the phenolic antioxidant can contribute to the improvement of flame retardancy without interfering with the effect of the NOR-type hindered amine compound in improving flame retardance. Therefore, even if the amount of NOR-type hindered amine compound is reduced, it is possible to provide high flame retardancy to a respective component. In addition, phenolic antioxidants are less likely to inhibit the fusion of foam foamed particles during molding, and the amount of NOR-type hindered amine compounds can be reduced. Therefore, it can be considered that it is possible to sufficiently fuse the foamed particles during molding. As a result, it is considered that by molding the foamed particles, it is possible to obtain a component having high flame resistance and excellent fusion bonding properties resulting in excellent structural properties.

In further exemplary embodiments, the foamed particles may further contain at least one sulfur antioxidant. The sulfur antioxidant can positively affect the thermal stability of the foamed particles. The sulfur antioxidant is an example of a respective additive mentioned before. The amount of the sulfur antioxidant can range between 0.01 and 0.5 wt.-%, particularly between 0.02 and 0.3 wt.-%, more particularly between 0.03 and 0.2 wt.-%, Particularly, the total phosphorus content of the foamed particles can range between 1.0 and 4.8 wt.-% and the amount of the sulfur antioxidant can range

between 0.01 and 0.5 wt.-%.

In exemplary embodiments in which the foamed particles further contain a sulfur antioxidant and a NOR-type hindered amine compound, the ratio of the amount of NOR-type hindered amine compound to the amount of sulfur antioxidant can be between 0.03 and 0.9. When the ratio is above 0.03, it is easier to obtain a molded component having excellent mechanical properties such as compression properties even when placed in a high temperature environment for a long time. Preferably, a ratio of the amount of NOR-type hindered amine compound to the amount of sulfur antioxidant of 0.07 or more, particularly 0.11 or more, more particularly 0.14 or more, is preferred. On the other hand, if the ratio is below 0.9, it is easier to obtain a molded component having a high degree of flame retardancy such that generally, the ratio is preferably between 0.07 and 0.8, more preferably between 0.11 and 0.7, and even more preferably between 0.14 and 0.6.

The sulfur antioxidants can include esters having a sulfide bond in the molecule. Specific examples of esters having a sulfide bond in the molecule include didodecyl-3,3'-thiodipropionate, ditridecyl-3,3'-thiodipropionate, ditetradecyl-3,3'-thiodipropionate, dioctadecyl-3,3'-thiodipropionate, pentaerythritol tetrakis(3-dodecylthiopropionate), pentaerythritol tetrakis(3-tridecylthiopropionate), Pentaerythritol tetrakis(3-tetradecylthiopropionate), pentaerythritol tetrakis(3-octadecylthiopropionate), etc. These may be used alone or in combination of two or more.

The foamed particles can have a bulk density of 10 to 500 kg/m$^3$. In exemplary embodiments, specifically, the foamed particles can have a bulk density of 10 to 200 kg/m$^3$. Particularly, the foamed particles can have a bulk density of at least 20 kg/m$^3$, more particularly of at least 30 kg/m$^3$, more particularly of at least 40 kg/m$^3$, more particularly of at least 50 kg/m$^3$, more particularly of at least 60 kg/m$^3$, more particularly of at least 70 kg/m$^3$, more particularly of at least 80 kg/m$^3$, more particularly of at least 90 kg/m$^3$, more particularly of at least 100 kg/m$^3$, more particularly of at least 110 kg/m$^3$.. Preferably, the foamed particles can have a bulk density of less than 180 kg/m$^3$, more particularly of less than 150 kg/m$^3$, even more particularly of less than 120 kg/m$^3$. The aforementioned ranges can also represent thresholds for intervals; as examples, the bulk density can range between 20 and 200 kg/m$^3$, 30 and 150 kg/m$^3$ or between, 80 and 130 kg/m$^3$. The aforementioned examples also represent preferred examples since they allow for molding lightweight components having good flame retardancy and fusion bonding properties.

The bulk density of the foam particles can be measured by the following method: first, the foam particles to be used for measurement are conditioned by conditioning them still for at least 24 hours in an environment of 23°C, 50% relative humidity, and 1 atm. After conditioning, a sample of foam particles of mass W (g) is filled into a cylinder so that they are naturally deposited, and the filling height of the group of foam particles in the cylinder is stabilized by lightly tapping the bottom of the cylinder several times against the horizontal surface. The bulk volume V (L) of the foam particles pointed to by the scale on the cylinder is read, and the mass W of the foam particles is divided by the bulk volume V of the foam particles (W/V) and converted to units to obtain the bulk density (kg/m$^3$) of the foam particles.

In exemplary embodiments, the foamed particles specified herein can have one or more melting peaks (high temperature peaks) on the high temperature side of the resin-specific melting peak (resin-specific peak) of said polyolefin resin in the DSC curve by differential scanning calorimetry, DSC, measured in accordance with JISK7122-2012. It is preferred to have one or more melting peaks (high temperature peaks) on the high temperature side of the resin-specific melting peaks (resin-specific peaks) of the polyolefin resin. These melting peaks can be obtained by the following method: Specifically, a DSC curve is obtained by heating 1-3 mg of foamed particles from 23°C to 200°C at a heating rate of 10°C/min by means of a differential scanning calorimeter. The peak with the highest melting calorific heat value is the melting peak specific to the polyolefin resin, or resin-specific peak, and the one or more melting peaks appearing at a higher temperature are the one or more high-temperature peaks. The DSC curve relates to the curve obtained by heating the foamed particles by the above-mentioned measurement method (DSC curve in the first heating). The resin-specific peak means the endothermic peak resulting from the melting of the crystals specific to the polyolefin-based resin constituting the foamed particles. In other words, the resin-specific peak is considered to be an endothermic peak that appears due to the endothermy caused by the melting of the crystals normally possessed by the polyolefin-based resin that constitutes the foamed particles.

To determinate the peak corresponding to the resin-specific peak or the one or more high temperature peaks, it is possible to use the following method: after heating the foamed particles from 23°C to 200°C at a heating rate of 10°C/min (first heating), the foamed particles are further cooled from 200°C to 23°C at a cooling rate of 10°C/min and then heated again from 23°C to 200°C at a heating rate of 10°C/min (second heating). On the DSC curve obtained from the second heating only the endothermic peak due to the melting of crystals specific to the polyolefin-based resin comprising the foamed particles appears. Since this resin-specific peak appears in both the DSC curve at the first heating and the DSC curve at the second heating, and although the temperature of the peak apex may differ slightly between the first and second heating (but the difference is usually less than 5°C), the identification of which peak is the resin-specific peak is possible. On the other hand, the one or more endothermic peaks on the high temperature side of the resin-specific peak are the one or more endothermic peaks that appear on the high temperature side of the DSC curve of the first heating, above the resin-specific peak. When these one or more high temperature peaks appear, it is presumed that secondary crystals exist in the polyolefin-based resin.

The heat of melting of the one or more high temperature peaks of the foamed particles is preferably 5 to 40 J/g,

more preferably 6 to 30 J/g, more preferably in the range between 7-25 J/g. When the heat of melting of the one or more high temperature peaks of the foamed particles is in the aforementioned range, it is possible to obtain a good component by molding with a wider processing window. The calorific heat of melting of the one or more high temperature peaks can be measured by the following method: on the DSC curve of the first heating, a straight line (α-β) is drawn connecting point a, corresponding to 80°C on the DSC curve, and point β on the DSC curve, corresponding to the melting end temperature T of the foam particles. The melting end temperature T is the end point of the high temperature side of the high temperature peak, or of the high temperature peak present at the highest temperature if more than one high temperature peaks are present, and is the intersection of the high temperature peak, or of the high temperature peak present at the highest temperature if more than one high temperature peak is present, and the baseline. Next, a straight line was drawn parallel to the vertical axis of the graph from point γ on the DSC curve, which corresponds to the point of lowest heat within the valley between the above resin-specific peak and the high temperature peak, or of the high temperature peak present at the lowest temperature if more than one high temperature peaks are present. The point of intersection with the above straight line (α-β) is δ. The calorific heat of melting of the one or more high temperature peaks, expressed in J/g, corresponds to the area of the one or more high-temperature peaks bounded by the curve of the one or more high-temperature peaks portion of the DSC curve, the line segment (δ-β), and the line segment (γ-δ), divided by the mass of foamed particles used for the experiment.

The foamed particles can have an average mass per piece (additive average per piece measured from 200 randomly selected pieces) of 0.1 to 20 mg, more preferably 0.2 to 10 mg, even more preferably 0.3 to 5 mg, even more preferably 0.4 to 2 mg.

In either embodiment, the foamed particles may contain one or more further additives. Such further additives may include, for example, various conventionally known additives such as other antioxidants, UV-absorbers for absorbing UV-radiation, light-stabilizing agents for absorbing light with a wavelength between 300 - 400 μm, antistatic agents, coloring agents, such as pigments or dyes, fillers, conductive fillers, cell size regulators and the like. These additives can be blended into the foamed particles, for example, by adding them in the process of manufacturing the foamed particles.

Specifically, cell size regulators may include talcum, metal salts of boric acid, polyhydric alcohols such as glycerin, polyethylene glycol, pentaerythritol or aliphatic alcohols such as cetyl alcohol and stearyl alcohol. The use of boric acid metal salts such as zinc borate and magnesium borate is preferred, and zinc borate is more preferred. The amount of metal borate salt in the compact particles should be between 0.005 and 0.5 wt.-%, particularly between 0.01 and 0.2 wt.-%, more particularly between 0.015 and 0.15 wt.-%.

When zinc borate is used or present, its number-based arithmetic mean particle diameter should be between 0.5 and 1.5 μm, preferably between 1 and 10 μm. The number-based arithmetic mean particle diameter of zinc borate can be obtained by converting the volume-based particle size distribution measured by laser diffraction scattering into a number-based particle size distribution assuming the particle shape as a sphere, and by arithmetic averaging the particle diameters based on this number-based particle size distribution. The particle diameter is determined by arithmetic averaging the particle diameters based on this number-based particle size distribution. The above particle diameter means the diameter of a virtual sphere having the same volume as the particle.

When the foamed particles comprise coloring agents, particularly red, blue, green, yellow and purple pigments or dyes can be used. The pigments or dyes may be inorganic or organic. Inorganic pigments or dyes can include, for example, chromates such as yellow lead, zinc yellow and barium yellow, ferrocyanides such as dark blue, sulfides such as cadmium yellow and cadmium red, oxides such as flagella, and silicates such as blue. As organic pigments, azo-pigments such as mono-azo- pigments, di-azo pigments, azo rakes, condensed azo pigments, chelated azo pigments, or polycyclic pigments such as phthalocyanines, anthraquinones, perylene, perinones, thioindigo, quinacridone, dioxazine, isoindolinones, quinophthalones, etc. can be used. Also, polycyclic pigments or dyes are conceivable.

If a uniform black or grey appearance of the foamed particles is desired, it is preferred to use iron oxide, titanium black or carbon particles as the aforementioned pigments. Carbon particles are particles composed of carbon, such as, for example, one or more materials selected from carbon black, conductive carbon, carbon nanotubes, graphene, graphite, activated carbon and the like. Among these, carbon black is preferred from the viewpoint of superior dispersibility in polyolefins and cost balance. Examples of carbon black include channel black, roller black, furnace black, thermal black, acetylene black, and Ketjen black.

When coloring agents are blended, to avoid impairing the impairing flame retardancy while maintaining a uniform coloring, the amount of coloring agents in the foamed particles should preferably range between 0.01 and 6 wt.-%, particularly between 0.1 and 5 wt.-%, more particularly between 0.2 and 4 wt.-%.

When using the aforementioned coloring agents to add color to a component molded from the foamed particles, carbon black, titanium dioxide, talc, calcium carbonate, magnesium hydroxide and magnesium carbonate or a combination of these may be added for the purpose of adjusting the brightness of the color and to make the appearance of the molding uniform.

UV-absorbers, if used or present, can include benzophenone compounds, benzotriazole compounds, triazine compounds and benzoate compounds. Benzophenone compounds can include 2-hydroxy-4-octyloxybenzophenone,

etc., while benzotriazole compounds include 2-(5-methyl-2-hydroxyphenyl)benzotriazole, 2-2-hydroxy-3,5-bis(*a*,*a*-dimethylbenzylphenyl)]-2H-benzotriazole, 2-(3, 5-di-t-butyl-2- hydroxyphenyl)benzotriazole, 2-(3-t-butyl-5-methyl-2-hydroxyphenyl)-5-chlorobenzotriazole, or 2-(3, 5-di-t-butyl-2-hydroxyphenyl)-5-chlorobenzotriazo.The triazine compounds can include 2-(3, 5-di-t-amyl-2-hydroxyphenyl)benzotriazole, 2-(2-(3,5-di-amyl-2-hydroxyphenyl)benzotriazole, 2-(2 '-hydroxy-5'-toctylphenyl)benzotriazole, etc. Triazine compounds can include 2 -[4,6-diphenyl-1,3,5-triazine-2-yl]-5-(hexyloxy)phenol, 2 -[4,6-bis(2,4-dimethylphenyl)-1, 3 ,5-triazine-2-yl] -Benzoate compounds include 2, 4-di-t-butylphenyl -3,5-di-t-butyl-4-hydroxybenzoate, hexadecyl-3,5-di-t-butyl-4-hydroxybenzoate and others. The amount of UV absorbers in the foamed particles can range between 0.01 and 2 wt.-%, preferably between 0.05 and 1.5 wt.-%, and more preferably between 0.1 and 1 wt.-%.

Light stabilizing agents can include hindered amine compounds (HALS). Hindered amine compounds can be compounds with a 2, 2 ,6 ,6-tetramethyl-4-piperidine amine moiety in which the only atom directly bonded to the nitrogen atom is hydrogen or carbon. The amount of respective light stabilizing agents in the foamed particles can range between 0.01 and 2 wt.-%, preferably between 0.05 and 1.5 wt.-%, and more preferably between 0.1 and 1 wt.-%.

As indicated further above, the foamed particles comprise a foam layer. Alternatively, the foamed particles may comprise a foam layer and at least one additional layer built or arranged on the foam layer. Such foamed particles can be deemed or denoted multi-layered foamed particles which comprise a foam layer as a core layer and at least one other layer coating or covering the core layer. The at least one other layer can also be a resin layer, particularly a polyolefin layer such as e.g. a polyethylene-based resin layer or a polypropylene-based resin layer. It is also conceivable that the at least one other layer is produced by grafting chemicals such as styrene monomer on top of another layer such as the core layer, optionally later polymerizing the grafted chemicals to obtain multi-layered foamed particles. At least one of the core layer and the at least one additional layer can comprise openings, e.g. through-holes, etc. In respective multi-layered foamed particles, the at least one additional layer can cover only a part or the entire (outer) surface of the foam layer.

When the at least one other layer is a resin layer such as a polyolefin layer, the melting point of a respective resin component comprised in a respective additional layer is preferably lower than that of the resin component comprising the foam layer to improve the fusion ability of the foamed particles during molding. It is also preferred that the coating layer is a substantially non-foam resin layer. In this case, it is possible to provide a molded component having a good mechanical strength.

The at least one additional layer can contain the phosphonate ester compound, the NOR-type hindered amine compounds, the phenolic antioxidant and the sulfuric antioxidant in the same proportions as the foam layer or in different proportions from the foam layer, or none of them may be used. At least one of the cyclic phosphonate compounds, NOR-type hindered amine compounds, phenolic antioxidants and sulfuric antioxidants may be selected to be blended in the at least one additional layer.

It is preferred that the at least one additional layer contains a lower amount of the phosphonate ester compound and the NOR-type hindered amine compounds than the foam layer. If the at least one additional layer contains a low amount of both phosphonate ester compound and NOR-type hindered amine compound, the fusion ability of the foamed particles during molding is increased and the moldability is improved. It is particularly preferred that the at least one additional layer contains neither phosphonate ester compound nor NOR-type hindered amine compounds.

In respective multi-layered foamed particles, the ratio of the mass of the component comprising the foaming layer to the mass of the components comprising the at least one additional layer should range between 99:1 to 70:30, preferably between 98:2 to 80:20, and more preferably between 97:3 to 85:15.

A second aspect of the invention relates to a component which is molded from the foamed particles according to the first aspect of the invention. The component can thus, be a foamed body. The component can be a vehicle component, i.e. a component which is to be arranged in a vehicle, such as particularly a component for a car, an aircraft, a watercraft, etc., for instance.

More concrete, yet non-limiting examples of respective components molded from respective foamed particles which are casing elements, housing elements and protection elements e.g. for battery devices, electric devices, electronic devices, etc.

The component is particularly, an in-mold molded body of the aforementioned foamed particles obtained through molding of the foamed particles. The component can comprise a foam structure comprising a polyolefin resin as the base resin. The polyolefin resin can be a polypropylene resin, a polyethylene resin, or a blend of a polypropylene resin and a polyethylene resin, for instance.

The in-mold molding process for manufacturing a respective component can be performed by filling the foamed particles into a molding mold and heating and molding the foamed particles. Specifically, after the foamed particles are filled into the molding mold, the foamed particles are heated to cause secondary foaming and fuse with each other to obtain the component which has the (negative) shape of the molding space. Examples of methods for heating the foamed particles include introducing a heating medium such as steam into the molding mold and heating the foamed particles by the heating medium, irradiating the foamed particles with electromagnetic waves such as radiofrequency waves, bonding the particles by introduction of specific chemicals (ATECARMA), welding of the particles inside the molding tool by

conductive heating of the molding tool without introduction of steam inside the cavity and a method combining such methods.

For filling the foamed particles into the molding mold, known methods can be employed. For example, the foamed particles can be compressed with a pressurized gas directly into a pressurized mold and then the pressure in the mold can be released (pressure filling method), or the foamed particles can be mechanically compressed by previously opening the mold to expand the molding space before filling the expanded beads into the mold and closing the mold after filling (cracking filling method). Before filling, the foamed particles can optionally be pressurized with a pressurized gas to give a predetermined internal pressure to the cells of the foamed particles and thus provide a certain further expansion ability to the foamed particles.

A third aspect of the invention relates to a method for producing polyolefin-based resin foamed particles. The method generally comprises the steps of: providing a component (A) which is or comprises a polyolefin-based resin; providing a component (B) which is or comprises a phosphonate ester compound, wherein the method comprises processing a mixture of at least components (A) and (B) and a blowing agent under application of a specific temperature and/or pressure, thereby producing the polyolefin- based resin foamed particles, wherein a total phosphorus content, P, of the foamed particles ranges from 0.1 to 6% by weight, wherein the polyolefin-based resin foamed particles satisfy the following equation:

$$\{[m_{215} - m_{235}] / m_{215}\} \times 100/P_{tot} \leq 35;$$

wherein

$m_{215}$: is the mass of the foamed particles as measured in a thermogravimetric measurement at 215°C;
$m_{235}$: is the mass of the foamed particles as measured in a thermogravimetric measurement at 235°C; and
$P_{tot}$: is a numerical weight value of the total phosphorus content of the foamed particles ranging between 0.001 to 0.06.

The method of mixing components (A) and (B) to obtain the mixture of components (A) and (B) is not particularly limited but can typically refer to known extrusion methods. The mixture of at least components (A) and (B) can be produced separately in a first process in which polyolefin resin particles are produced, followed by the processing of the produced mixture (polyolefin resin particles) and a blowing agent under application of a specific temperature level and/or pressure level in a subsequent process, such as autoclave process, thereby producing the polyolefin-based resin foamed particles, or the mixture of at least components (A) and (B) can be produced and further processed with a blowing agent under application of a specific temperature level and/or pressure level in a same process step (extrusion-foaming process) thereby producing the polyolefin-based resin foamed particles.

Particularly, the amount of phosphonate ester compound in the mixture is between 3 - 20 wt.-%, particularly between 5 and 18 wt.-%, more particularly between 7.5 and 15 wt.-%. When the content of phosphonate ester compound is within the aforementioned range, the foamed particles as produced by the method have good properties, particularly with respect to a desired flame retardancy.

Generally, the mixture of components (A) and (B) can also contain one or more other additives. Examples of respective additives have been disclosed in exemplary embodiments further above.

In general, when polyolefin resin and phosphonate ester compounds are processed to produce foamed particles, the aforementioned raw materials can be melt-mixed in an extruder, then extruded into strands, cut into predetermined lengths, and resin particles can be produced. The resin particles can be fed into a pressure vessel together with an aqueous dispersant such as water, heated appropriately, and then released into a relatively low-pressure environment to form foam. In this series of processes, the polyolefin resin is melt-mixed with the phosphonate ester compounds, which are hygroscopic compounds, resulting in a substantial increase in the hygroscopy of the resin particles themselves. It is believed that the increase in hygroscopy of the polyolefin resin described above would result in a lower percentage of closed cells in the resulting foam particles, which in turn would reduce the fusion property of the foam particles during in-mold molding and result in insufficient surface properties of the resulting foam particle molded bodies. The inventors have surprisingly found that when the method of processing a mixture of at least components (A) and (B) and a blowing agent under application of a specific temperature level and/or pressure for a specific period of time according to the invention is implemented in a process involving the use of an aqueous liquid dispersing agent, a significant reduction of the foamed particles hygroscopy is observed, as will be apparent from the examples of the present invention. It is believed that the decrease of the foamed particles hygroscopy is linked to the gentler conditions of temperature and/or pressure and/or time of residency of the resin particles during their processing under application of a specific temperature level and/or pressure for a specific period of time compared to conventional processes of the state-of-art. Likewise, the inventors have surprisingly found that when the method of processing a mixture of at least components (A) and (B) and a blowing agent under application of a specific temperature level and/or pressure for a specific period of time according to the invention is

implemented in a process involving the use of an aqueous liquid dispersing agent, a larger amount of phosphorus that was initially introduced during mixing of components (A) and (B) remains within the resulting foamed particles as will be apparent from the examples of the present invention. It is believed the gentler conditions of temperature and/or pressure and/or time of residency of the resin particles during their processing under application of a specific temperature level and/or pressure for a specific period of time leads to a further reduction of the extraction of the hygroscopic phosphorous compounds from the resin particles to the aqueous liquid dispersing medium compared to conventional processes of the prior art.

Particularly, the method of processing the mixture of at least components (A) and (B) and a blowing agent under application of a specific temperature level for a specific period of time comprises heating the mixture of at least components (A) and (B) and the blowing agent to a specific foaming temperature of at least 100°C and holding the mixture at this specific foaming temperature level for a specific time, wherein during heating to a specific foaming temperature of at least 100°C and holding the mixture at the specific foaming temperature, the mixture is subject to a temperature of at least 80°C for a time equal to or less than 60 minutes, particularly equal or less than 50 minutes, more particularly equal or less than 45 minutes, more particularly equal or less than 40 minutes, more particularly equal or less than 35 minutes. In other words, the application of the specific temperature level can comprise applying a temperature of at least 80°C for a period shorter than 60 minutes, particularly shorter than 50 minutes, particularly shorter than 45 minutes, more particularly shorter than 40 minutes, more particularly shorter than 35 minutes. Hence, the specific temperature level can be applied in the range between 80 and 180°C, particularly between 80 and 160°C.

The temperature of at least 80°C is selected under consideration of the degradation temperature of the phosphonate ester compound and/or the melting of the crystals of the polyolefin-base resin (if it is an at least partially crystalline polyolefin). Tests have shown that the degradation of the phosphonate ester compound becomes significant at 80°C and that the low-melting point crystals of the polyolefin-based resin significantly begin to melt such that selecting 80°C as a specific temperature level for heating the mixture of at least components (A) and (B) and the blowing agent enables desired results.

The temperature of at least 80°C can be applied for a period ranging between 10 to 60 minutes, particularly between 20 to 50 minutes, more particularly between 25 to 45 minutes, more particularly between 25 and 35 min. When the period of time is within the aforementioned ranges, it is believed that the level of degradation of component (B) is reduced because the time period of exposure of component (B) to harsh degrading conditions is small. The temperature can be applied to the mixture of components (A) and (B) when the mixture is, particularly in the presence of an aqueous or non-aqueous liquid dispersing agent, such as e.g. respectively water or (silicone) oil, in an autoclave.

The application of the specific pressure level can comprise applying a pressure in the range 0,1 and 10 MPaG, more particularly between 0,2 and 7.5 MPaG, more particularly between 0.3 and 5 MPaG, more particularly between 0.4 and 5 MPaG, more particularly between 0.5 and 4.5 MPaG. The pressure can be applied for a period ranging between 10 to 60 minutes, particularly between 20 to 50 minutes, more particularly between 25 to 45 minutes, more particularly between 25 and 35 min. When the period of time is within the aforementioned ranges, it is believed that the level of degradation of component (B) is reduced because the time period of exposure of component (B) to harsh degrading conditions is small. The pressure can be applied to the mixture of components (A) and (B) when the mixture is, particularly in the presence of an aqueous or non-aqueous liquid dispersing agent, such as e.g. water or (silicone) oil, in an autoclave.

As such, the mixture can generally be processed in a liquid dispersing agent, wherein the liquid dispersing agent is or comprises a non-aqueous liquid, e.g. in an autoclave. Alternatively, the mixture can be processed without a liquid dispersing agent, e.g. in a pressure tank. When the mixture is processed in a non-aqueous liquid or without liquid dispersing agent, it is believed that the level degradation of component (B) is reduced because no substantial water-induced degradation, such as hydrolysis, occurs.

An exemplary method of producing the foamed particles comprises a dispersing process of dispersing a mixture of at least components (A) and (B), possibly together with NOR-type hindered amine compound and/or a phenolic antioxidant and/or a sulfuric antioxidant and/or further respective additives, in an aqueous medium containing an inorganic solid dispersing agent in a container. The method can include a foaming step in which the mixture is impregnated with a foaming agent under the influence of pressure and temperature, and a foaming step in which the foamed particles containing the foaming agent are released from the container together with the aqueous medium in an atmosphere at a lower pressure level to form a foam.

Another exemplary method of producing the foamed particles comprises extruding a mixture of at least components (A) and (B) via an extruder, introducing a blowing agent into the molten mixture and pelletizing the extrudate same, to form the foamed particles. Such process is a non-limiting example of a 1-step process of production of the foamed particles.

The method of producing polyolefin resin particles in a 2-steps process can be described as follows. The polymer particles are first fed into an extruder with a polymer including the polyolefin resin (component (A)), a phosphonate ester compound (component (B)), optionally a NOR-type hindered amine compound, optionally a phenolic antioxidant and/or a sulfuric antioxidant and optionally further additives blended as necessary, and then heated and kneaded to obtain a resin

melt. The melted resin is then extruded from the extruder and pelletized by strand cutting, hot cutting, underwater cutting, or other methods to produce polyolefin resin particles. In the case of producing multi-layered polyolefin resin particles, a manufacturing apparatus equipped with an extruder for forming a core layer, a die for forming multi-layered strands attached downstream of the extruder for forming a core layer, and an extruder for forming a coating layer may be used.

The average mass of the resin particle (additive average per particle measured from 200 randomly selected masses) is preferably adjusted to be between 0.1 and 20 mg, more preferably between 0.2 and 10 mg, even more preferably between 0.3 and 5 mg, and even more preferably between 0.4 to 2 mg.

The strand-cut method particularly, forms cylindrical resin particles. When the external shape of the resin particles is cylindrical, the particle length in the extrusion direction of the polyolefin resin particles is preferably between 0.1 and 4.0 mm, more preferably between 0.3 and 3 mm, more preferably between 0.5 and 2.5 mm. The ratio of the length to diameter (length/diameter ratio) is preferably between 0:5 and 5.0, more preferably between 1.0 and 3.0. The particle size, length/diameter ratio and average mass of the foamed particles in the strand cut method can be adjusted by cutting the strands during extrusion of the melt, varying the extrusion speed, take-up speed and cutter speed as appropriate.

A preferred method of producing polyolefin-based foamed particles comprises the dispersing process of a mixture of polyolefin resin particles containing a phosphonate ester compound, particularly a cyclic phosphonate ester compound, a NOR-type hindered amine compound, a phenolic antioxidant and a sulfuric antioxidant in an aqueous medium containing a solid dispersing agent in a container, the impregnation step of impregnating said polyolefin resin particles with a foaming agent in said container and releasing said polyolefin resin particles containing the foaming agent together with an aqueous medium at a lower pressure than the container internal pressure to form polyolefin resin foamed particles.

It is preferred to use an aqueous dispersing agent as a dispersing agent for dispersing said resin foamed particles in the container. The aqueous dispersing agent can thus, be a water-based dispersing agent. The proportion of water in the aqueous dispersing agent can be more than 70 wt.-%, more preferably more than 80 wt.-%, even more preferably more than 90 wt.-%, and may be even 100 wt.-%. Dispersing agents other than water in the aqueous dispersing agent include ethylene glycol, glycerin, methanol, ethanol, (silicone) oil, etc.

In the dispersing process, a solid dispersing agent is preferably added to the dispersing medium to prevent the polyolefin resin foamed particles heated in the container from fusing with each other. Both organic and inorganic solid dispersing agents can be used as long as they prevent the polyolefin resin foamed particles from fusing together in the container, but inorganic solid dispersing agents are preferred, and fine-grained inorganic solid dispersing agents are more preferable due to their ease of handling. For example, natural or synthetic clay minerals such as kaolin, mica and clay, aluminum oxide, titanium oxide, basic magnesium carbonate, basic zinc carbonate, calcium carbonate and iron oxide are examples, and one of these may be used or a combination of two or more may be used. Of these, natural or synthetic clay minerals are preferred as solid dispersing agents. The amount of dispersing agent inside the container ranges preferably between 0.001 to 5 wt.-% relative to the mass of polyolefin resin particles introduced inside the container.

When a solid dispersing agent is used, it is preferable to use an anionic surfactant such as sodium dodecylbenzenesulphonate, sodium alkylsulphonate or sodium oleate together with the solid dispersing agent as a dispersing aid. It is preferable to add about 0.001 to 1 part by mass of said dispersing aid per 100 parts by mass of the polyolefin resin particles in the aqueous medium.

It is preferable to use a physical foaming agent as the foaming agent for foaming the polyolefin foamed particles. The physical foaming agent may be an inorganic physical foaming agent or an organic physical foaming agent, wherein carbon dioxide, air, nitrogen, helium, argon, etc. are mentioned as inorganic physical foaming agents. The organic physical foaming agents include propane, aliphatic hydrocarbons such as n-butane, i-butane, n-pentane, i-pentane, hexane, cyclopentane, cyclohexane, chlorofluoromethane, trifluoromethane, 1,1 -difluoroethane, 1-chloro-1,1-difluoroethane, 1,1,1,2-tetrafluoroethane, methylchloride, ethylchloride, methylchloride, ethylchloride, methylene chloride, etc. methylene chloride and other halogenated hydrocarbons. These physical foaming agents can be used alone as foaming agents. Alternatively, two or more foaming agents can be used in a mixture. Inorganic physical foaming agents and organic physical foaming agents may also be used in combination. The foaming agent is preferably an inorganic physical foaming agent which enables increasing the environmental impact and the flame retardancy of a component molded from the foamed particles. As an example, carbon dioxide can be used as inorganic foaming agent.

The amount of blowing agent added to 100 wt.-% of polyolefin resin particles ranges preferably between 0.1 and 30 wt.-%, more preferably between 0.5 and 15 wt.-%.

The method of impregnating the resin particles with a foaming agent is preferably implemented by dispersing the resin particles in an aqueous dispersant in a sealed container, e.g. an autoclave, then pressurizing the foaming agent into the sealed container and holding the sealed container at a predetermined temperature and pressure.

During the foaming step, the (internal) pressure in the container, i.e. the (internal) pressure in the container immediately before the resin foamed particles are released with the aqueous medium, is preferably 0.1 MPaG or higher, preferably 0.2 MPaG or higher, more preferably 0.5 MPaG or higher. The upper limit is preferably less than 5 MPaG, more preferably less than 4 MPaG. Within the above range, the desired foamed particles can be produced safely without any risk

of damage to the closed container or explosion.

The temperature is preferably raised up to a set foaming temperature, the foaming temperature being selected based on the polyolefin resin comprised in the polyolefin resin particles and held at that temperature for 1- 30 min before the resin foamed particles containing the foaming agent are released from the sealed container into an atmosphere of lower pressure than the pressure in the container (e.g. under atmospheric pressure) to produce the foamed particles.

In the case where the polyolefin resin particles are based on a polypropylene resin, it is particularly preferred that the foaming temperature is 160°C or less, more preferably 155°C or less, even more preferably 150°C or less.

In the case where the polyolefin resin particles are based on a polyethylene resin, it is particularly preferred that the foaming temperature is 140°C or less, more preferably 135°C or less, even more preferably 130°C or less.

It is believed that by selecting a lower foaming temperature, the level of degradation of component (B) is reduced because component (B) is not exposed to high degrading temperatures. In other words, by selecting a polyolefin resin making it possible to have a (relatively) low foaming temperature, it is easier to obtain polyolefin foamed particles which satisfy the following equation:

$$\{[m_{215} - m_{235}] / m_{215}\} \times 100/P_{tot} \leq 35;$$

wherein

- $m_{215}$: is the mass of the foamed particles as measured in a thermogravimetric measurement at 215°C;
- $m_{235}$: is the mass of the foamed particles as measured in a thermogravimetric measurement at 235°C; and
- $P_{tot}$: is a numerical weight value of the total phosphorus content of the foamed particles ranging between 0.001 to 0.06.

The polyolefin resin foamed particles obtained as described above can also be made into foamed particles with a higher foaming ratio (lower bulk density) in a secondary process. In the secondary process, the polyolefin resin foamed particles obtained as described above are pressurized into a pressure-tight container with a pressurizing fluid, e.g. air or carbon dioxide, etc. to increase the pressure (internal pressure) in the foam layer cells and then further foaming (two-stage foaming) the pressurized foamed particles by heating with steam, radio-frequency, infrared heating, and the like.

A fourth aspect of the invention relates to a method of at least qualitatively determining the flame-retardant behavior of foamed particles according to the first aspect of the invention. The method comprises providing respective foamed particles and determining, particularly based on respective TGA-measurements and spectroscopy-measurements as specified above, the respective mass of the foamed particles in a thermogravimetric measurement at 215°C and at 235°C and if a weight value of the total phosphorus content, P, of the foamed particles ranges between 0.1 to 6 %. If the weight value of the total phosphorus content, P, of the foamed particles ranges between 0.1 to 6 %, the method further comprises determining if the foamed particles satisfy the following equation:

$$\{[m_{215} - m_{235}] / m_{215}\} \times 100/P_{tot} \leq 35;$$

wherein

- $m_{215}$: is the mass of the foamed particles measured in the thermogravimetric measurement at 215°C;
- $m_{235}$: is the mass of the foamed particles measured in the thermogravimetric measurement at 235°C; and
- $P_{tot}$: is a numerical weight value of the total phosphorus content of the foamed particles ranging between 0.001 to 0.06.

If the foamed particles satisfy the equation, the foamed particles are determined as having a sufficiently high flame-retardant behavior, otherwise, the foamed particles are determined as not having a sufficiently high flame-retardant behavior. A sufficiently high flame-retardant behavior can satisfy at least one of the following UL94 rating classifications: HB-F, HF-2, HF-1, V-2, V-1, V-0. As such, if the foamed particles satisfy the equation, the foamed particles can satisfy at least one of the following UL94 rating classifications: HB-F, HF-2, HF-1, V-2, V-1, V-0.

The method can be performed at least partially under the control of a hardware- and/or software-embodied controller which uses input parameters, such as the aforementioned parameters $m_{215}$, $m_{235}$ and $P_{tot}$, and determines, using the input parameters, if the above equation is met. The result of the determination can be output to a user and/or to another hardware- and/or software-embodied functional device.

All annotations regarding the foamed particles of the first aspect of the invention also apply to the component of the second aspect of the invention and/or to the method of the third aspect of the invention and/or to the method of fourth aspect of the invention and vice versa.

The invention will now be described in more detail by means of working examples, however the invention is not

limited in any way by these working examples.

Below reproduced tables 1 and 2 show eleven working examples of foamed particles in accordance with various embodiments of the invention which particularly differ in parameters of the original (compact) polyolefin resin particles which are to be processed to produced foamed particles and the parameters of the process for producing the foamed particles from the resin particles. As an example, different liquid dispersing agents, such as water and Polydimethylsiloxane (PDMS, silicon oil), and different temperature levels, pressure levels, heating times have been used throughout the examples.

The resin particles made of PP1 are made from an ethylene-propylene copolymer having a melting point of 143°C, an ethylene content of 2.1 wt.-%, a MFR of 6 g/10 min (measured at a load of 2.16 kg, at 230°C in accordance with JIS K7210-1:2014).

The resin particles made of PP2 are made from an ethylene-propylene copolymer having a melting point of 133°C, an ethylene content of 3.5 wt.-%, a MFR of 6 g/10 min (measured at a load of 2.16 kg, at 230°C in accordance with JIS K7210-1:2014).

The resin particles made of PE are made from a linear low-density polyethylene (LLDPE) having a melting point of 120°C, a MFR of 1.5 g/10 min (measured at a load of 2.16 kg, at 190°C in accordance with JIS K7210-1:2014).

The term "monolayer" indicates that the resin particles have only a foam layer without additional covering or coating layer. The term "multilayer" indicates that the resin particles have a foam layer as core layer and a substantially non-foamed resin layer as additional layer covering the core layer referred to as "coating layer".

The phosphonate ester compound used in the examples is "Aflammit PCO 900" as available from Thor GmbH, 67329 Speyer, Germany melting point 240°C, compound represented by the following formula (6), wherein $R^1$ and $R^2$ are methyl groups.

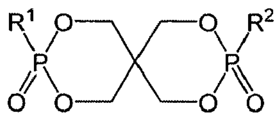

The NOR-type hindered amine compound used in the examples is "Flamestab NOR 116" which is available from BASF Japan Ltd., Tokyo, Japan represented by the following formula, with a molecular weight of 2261 g/mol.

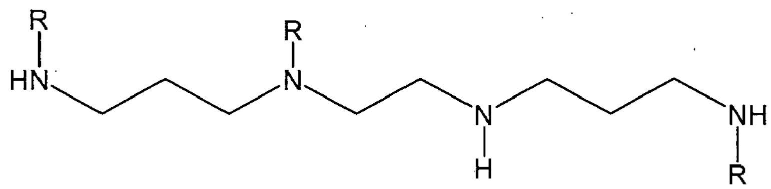

R=

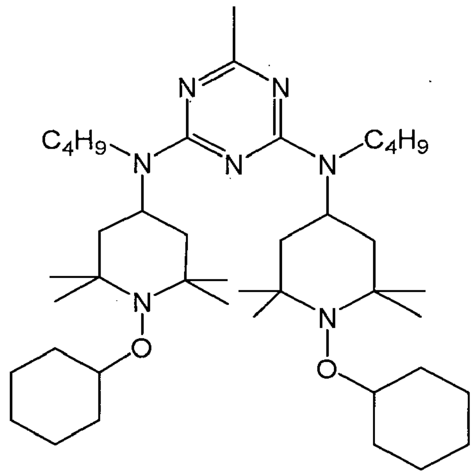

Phenolic antioxidant: Trade name "Irganox 1330", manufactured by BASF, melting point 245°C, compound represented by the following formula:

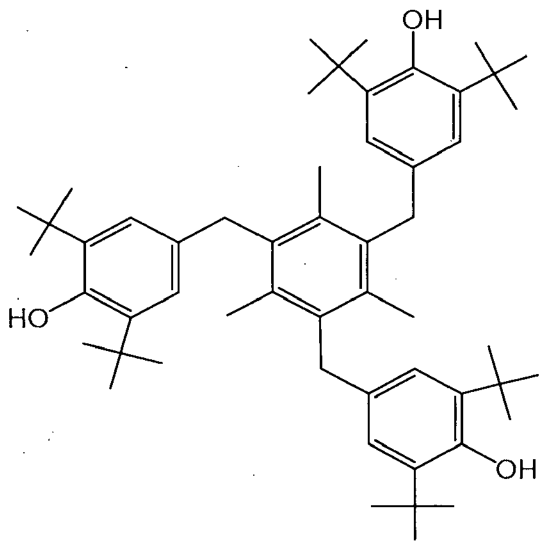

Sulphur antioxidant: Dioctadecyl-3,3'-thiodipropionate: BASF, trade name Irganox PS 802, compound represented by the following formula:

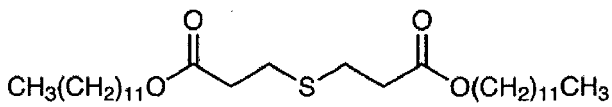

(Example 1)

An extruder with an inner diameter of 50 mm, equipped with a die for forming strands on the outlet side, was prepared.

PP1, zinc borate (arithmetic mean particle size on a number basis: 9 μm), Aflammit PCO 900, Flamestab NOR 116, Irganox 1330 and Irganox PS 802 were fed to the extruder in the proportions of the formulations in Table 1 and melted and kneaded to form a resin melt.

The resulting resin melt was extruded as strands from a strand-forming die, the extruded strands were cooled in water and cut with a pelletizer to obtain resin particles (with an average mass of 1.0 mg per particle).

In a 100 L sealed vessel, 2 kg of the aforementioned resin particles, 75 L of water as liquid dispersing agent, 65 g of kaolin and 43 g of sodium dodecylbenzenesulphonate were prepared.

Next, carbon dioxide was pressurized as a foaming agent into the sealed container until a gauge pressure of 0.5 MPa (G) was achieved. Next, the content of the sealed vessel was heated up to the foaming temperature shown in Table 1. Next, carbon dioxide was pressurized into the sealed container to the pressure (foaming pressure) indicated in Table 1 using gauge pressure, and then further held at the same temperature and pressure for 9 minutes. The total duration during heating and holding for which the resin particles were exposed to a temperature of at least 80°C is detailed in Table 1.

The content of the closed container was then released under atmospheric pressure to foam the polypropylene resin particles, thereby obtaining polypropylene resin foam particles. The measurement results of the properties of the obtained polypropylene-based resin foamed particles are shown in Table 1.

(Examples 2-6 and Comparative Examples 1-7)

Polypropylene-based resin foam particles were obtained in the same manner as in Example 1, except that the amounts of components and the process parameters were changed. The amount of each component and the associated process conditions are shown in Table 1 and 3. The measurement results of the properties of the obtained polypropylene-based resin foamed particles are shown in Table 1 and 3.

(Example 7)

Polyolefin-based resin foam particles were obtained in the same manner as Examples 1-6, except that the

amounts of components and the process parameters were changed, and except that the polyolefin resin was a polyethylene resin. The amount of each component and the associated process conditions are shown in Table 2.

(Examples 8 - 10)

Polyolefin-based resin foam particles were obtained in the same manner as Examples 1-6, except that the amounts of components and the process parameters were changed, and except that the liquid dispersing agent was polydimethylsiloxane (PDMS). The amount of each component and the associated process conditions are shown in Table 2.

The foamed particles obtained in Examples 8-10 were carefully washed out of all remaining PDMS oil by solvent washing and dried off their solvent prior measuring their density. Then, the foamed particles were subjected to the following molding, and the resulting molded bodies were evaluated for fusion-bonding rate. As a mold, a split mold for flat plate molding having a molding space of 400 mm long × 300 mm wide × 30 mm thick was prepared. The molding space was filled with foamed particles and the mold was clamped. Next, steam was supplied into the mold to heat the foamed particles to form a plate-shaped foamed particle molded product.

Heating with steam was performed as follows: first, steam was supplied into the mold with the drain valves of both mold sides open (exhaust step). Next, with the drain valve of the other mold side open, steam was supplied into the mold from one mold side to heat it (one-sided heating step). Next, steam was supplied from the other mold side with the drain valve of one mold side open (reverse one-sided heating step). Subsequently, with the drain valves of both mold sides closed, steam was supplied from both sides until the inside of the mold reached a molding steam pressure of 0.32 MPaG (double-sided heating step). After the double-sided heating step is completed, the pressure inside the mold is released, and the mold is cooled with water until reaching a pressure (surface pressure) of 0.05 MPaG generated on the molding surface of the mold due to the secondary foaming force of the expanded particle molding.

Thereafter, the mold was opened and the expanded particle molded product was taken out from the mold. The molded product taken out from the mold was cured in an oven at 80° C for 12 hours, and then slowly cooled to room temperature.

The thus obtained foamed particle molded body was bent and fractured, and the number of foamed particles present on the fracture surface (C1) and the number of foamed particles whose material was fractured (C2) were measured.

The ratio of the number of foamed particles with material destruction to the number of foamed particles (C2/C1×100) was calculated as the material destruction rate.

The above measurements were performed on three molded bodies, and the arithmetic mean value of the respective material failure rates was determined as the fusion-bonding rate. The obtained fusion-bonding rate was evaluated based on the following criteria. Note that the larger the value of the fusion-bonding rate, the better the fusion properties between the expanded particles.

As a result of measuring the fusion rate, Example 8 was evaluated as resulting in a fusion-bonding rate of 60% or more, Examples 9 and 10 were evaluated as resulting in a fusion-bonding rate is 30% or more and less than 60%.

(Example 11)

An extruder with an inner diameter of 50 mm, equipped with a die for forming strands on the outlet side, was prepared.

PP1, zinc borate (arithmetic mean particle size on a number basis: 9 μm), Aflammit PCO 900, Flamestab NOR 116, Irganox 1330 and Irganox PS 802 were fed to the extruder in the proportions of the formulations in Table 1 and melted and kneaded to form a resin melt.

The resulting resin melt was extruded as strands from a strand-forming die, the extruded strands were cooled in water and cut with a pelletizer to obtain resin particles (with an average mass of 1.0 mg per particle).

The aforementioned resin particles were loaded with carbon dioxide as a blowing agent at a pressure of approximately 5.0 MPaG for a period of 1000 h without heating or temperature control to obtain pressurised resin particles.

The pressurised resin particles were then foamed into polypropylene foamed particles by conveying the pressurised resin particles through an infrared continuous oven comprising several infrared emitters.

The measurement results of the properties of the obtained polypropylene-based resin foamed particles are shown in Table 2.

Tables 1 and 2 show that all eleven working examples satisfy the equation provided above and in claim 1 (see the value provided in the last line of tables 1 and 2). All eleven examples thus, show good flame-retarding properties. Table 3 shows eight comparative examples ("C1 - C8"), wherein comparative example 1 corresponds to working example 1, comparative example 2 corresponds to working example 2, comparative example 3 corresponds to working example 3, comparative example 4 corresponds to working example 4, comparative example 5 corresponds to working example 5,

comparative example 6 corresponds to working example 6, comparative example 7 corresponds to working example 10 and comparative example 8 corresponds to working example 11.

In contrast to the working examples, the comparative examples do not satisfy the equation provided above and in claim 1 (see the value provided in the last line of table 3). It is believed that the reason for this is the presence of or at least a higher presence of altered/degraded phosphonate ester compounds in the foamed particles according to the comparative examples.

The examples shown in Tables 1 and 2 should not be considered as exhaustive measures to mitigate the degradation of the phosphonate ester compound, and other measures, e.g. changing the pH, pressure, etc., affecting the chemical reaction involved in the degradation could be considered.

The presence of such altered/degraded phosphonate ester compounds can be shown in solid phosphorus NMR-analyses, for instance. Typically, the results of respective $^{31}P$ NMR-analyses show additional peaks in the foamed particles relative to the original resin particles which additional peaks indicate altered/degraded phosphonate ester compounds.

| Table 1 | | | Example 1 | Example 2 | Example 3 | Example 4 | Example 5 | Example 6 |
|---|---|---|---|---|---|---|---|---|
| Polyolefin resin particles | Type of particle | | Monolayer | Multilayer | Multilayer | Multilayer | Multilayer | Multilayer |
| | Coating layer | Weight ratio foaming layer:covering layer | 100:0 | 97:3 ' | 973 | 97:3 | 85:15 | 97:3 |
| | | Thermoplastic polymer in resin layer | - | PP2 | PP2 | PP2 | PP2 | PP2 |
| | | Phosphonate ester compound (wt.-%) | - | 0 | 0 | 0 | 0 | 0 |
| | | NOR-type hindered amine compound (wt.-%) | - | 0 | 0 | 0 | 0 | 0 |
| | Foam layer | Polyolefin resin | PP1 | PP1 | PP2 | PP1 | PP1 | PP2 |
| | | Phosphonate ester compound (wt.-%) | 11 | 11.3 | 11.3 | 10.3 | 11.8 | 3.1 |
| | | NOR-type hindered amine compound (wt.-%) | 3.0 | 3.0 | 1.0 | 0.8 | 0.9 | |
| | | Phenolic antioxidant (wt.-%) | 0.1 | 0.1 | 0.1 | 0.1 | 0.1 | 0.1 |
| | | Sulfuric antioxidant (wt.-%) | 0.1 | 0.1 | 0.1 | 0.1 | 0.1 | 0.1 |
| | | Zinc Borate (wt.-%) | 0.01 | 0.01 | 0.01 \ | 0.01 | 0.01 | 0.01 |
| | Total phosphonate ester compound (wt.-%) | | 11.0 | 11.0 | 11.0 | 10.0 | 0.0 | 3.0 |
| | Total NOR-type hindered amine compound (wt.-%) | | 3.0 | 2.9 | 1.0 | 0.8 | 0.8 | 0.0 |
| | Total polyolefin resin (wt.-%) | | 86 | 86 | 88 | 89 | 89 | 97 |
| | Weight ratio phenolic antioxidant over NOR compound | | 0.03 | 0.03 | 0.09 | 0.13 | 0.11 | - |
| | Weight ratio sulfuric antioxidant over NOR compound | | 0.03 | 0.03 | 0.09 | 0.13 | 0.11 | - |
| | Total phosphorus content (wt.-%) | | 2.7 | 2.7 | 2.7 | 2.4 | 2.4 | 0.7 |
| | Melting point (°C) | | 147 | 147 | 140 | 146 | 147 | 137 |

(continued)

| Table 1 | | Example 1 | Example 2 | Example 3 | Example 4 | Example 5 | Example 6 |
|---|---|---|---|---|---|---|---|
| Polyolefin resin foamed particles | Foaming temperature (°C) | 155 | 153 | 148 | 151 | 151 | 144 |
| | Foaming pressure (MPaG) | 0.9 | 1.6 | 1.2 | 1.7 | 1.7 | 2.3 |
| | Liquid dispersing agent | Water | Water | Water | Water | Water | Water |
| | Total time of exposure (Heating + holding) above 80°C (min) | 30 | 27 | 33 | 36 | 34 | 29 |
| | High temperature peak (J/g) . | 3 | 4 | 11 | 12 | 13 | 9 |
| | Density ($kg/m^3$) | 145 | 90 | 17-1 | 94 | 99 | 59 |
| | Humidity after expansion (wt.-%) | 30 | 21 | 17 | 16 | 13 | 9 |
| | Total phosphorus content (wt.-%) | 2.6 | 2.4 | 2.7 | 2.2 | 2.3 | 0.7 |
| | $P_{tot}$ | 0.026 | 0.024 | 0.027 | 0.022 | 0.023 | 0.007 |
| | {[m215 - m235] / m215} × 100/$P_{tot}$ | 27 | 32 | 27 | 31 | 30 | 30 |

| Table 2 | | | Example 7 | Example 8 | Example 9 | Example 10 | Example 11 |
|---|---|---|---|---|---|---|---|
| Polyolefin resin particles | Type of particle | | Multilayer | Monolayer | Monolayer | Monolayer | Multilayer |
| | Coating layer | Weight ratio foaming layer:covering layer | 97:3 | 100:0 | 100:0 | 100:0 | 97:3 |
| | | Thermoplastic polymer in resin layer | PE | - | - | - | PP2 |
| | | Phosphonate ester compound (wt.-%) | 0 | - | - | - | 0 |
| | | NOR-type hindered amine compound (wt.-%) | 0 | - | - | - | 0 |
| | Foam layer | Polyolefin resin | PE | PP1 | PP1 | PP1 | PP1 |
| | | Phosphonate ester compound (wt.-%) | 11.3 | 11 | 11.0 | 18 | 8.8 |
| | | NOR-type hindered amine compound (wt.-%) | 3.0 | 3.0 | 5.1 | 3.0 | 1.5 |
| | | Phenolic anti-oxidant (wt.-%) | 0.1 | 0.1 | 0.01 | 0.1 | 0.1 |
| | | Sulfuric anti-oxidant (wt.-%) | 0.1 | 0.1 | 0.1 | 0.1 | 0.1 |
| | | Zinc Borate (wt.-%) | 0.01 | 0.01 | 0.01 | 0.01 | 0.01 |
| | Total phosphonate ester compound (wt.-%). | | 11.0 | 11.0 | 11.0 | 18.0 | 8.5 |
| | Total NOR-type hindered amine compound (wt.-%) | | 2.9 | 3.0 | 5.1 | 3.0 | 1.5 |
| | Total polyolefin resin (wt.-%) | | 86 | as | 84 | 79 | 10 |
| | Weight ratio phenolic antioxidant over NOR compound | | 0.03 | 0.03 | 0.02 | 0.03 | 0.07 |
| | Weight ratio sulfuric antioxidant over NOR compound | | 0.03 | 0.03 | 0.02 | 0.03 | 0.07 |
| | Phosphorus content (wt.-%) | | 2.7 | 2.7 | 2.7 | 4.4 | 2.1 |
| | Melting point (°C) | | 124 | 147 | 146 | 147 | 148 |

(continued)

| Table 2 | | Example 7 | Example 8 | Example 9 | Example 10 | Example 11 |
|---|---|---|---|---|---|---|
| Polyolefin resin foamed particles | Foaming temperature (°C) | 122 | 154 | 152 | 153 | 23 |
| | Foaming pressure (MPaG) | 4.0 . | 1.1 | 1.8 | 1.6 | 5.3 |
| | Liquid dispersing agent | Water | PDMS | PDMS | PDMS | - |
| | Total time of exposure (Heating + holding) above 80°C (min) | 74 | 88 | 89 | 92 | 0 |
| | High temperature peak (J/g) | 14 | 17 | 15 | 15 | 0 |
| | Density ($kg/m^3$) | 115 | 175 | 100 | 135 | 102 |
| | Humidity after expansion (wt.-%) | 15 | 0 | 0 | 0 | 0 |
| | Total phosphorus content (wt.-%) | 2.6 | 2.6 | 26 | 4.1 | 2.0 |
| | $P_{tot}$ | 0.026 | 0.026 | 0.026 | 0.041 | 0.02 |
| | $\{[m215 - m235] / m215\} \times 100/P_{tot}$ | 22 | 17 | 15 | 13 | 31 |

| Table 3 | | | C1 | C2 | C3 | C4 | C5 | C6 | C7 | C8 |
|---|---|---|---|---|---|---|---|---|---|---|
| Polyolefin **resin particles** | Type of particle | | Monolayer | Multilayer | Multilayer | Multilayer | Multilayer | Multilayer | Monolayer | Multilayer |
| | Coating layer | Weight ratio foaming layer:covering layer | 100:0 | 97:3 | 97:3 | 97:3 | 85:15 | 97:3 | 100:0 | 97:3 |
| | | Thermoplastic polymer in resin layer | - | PP2 | PP2 | PP2 | PP2 | PP2 | - | PP2 |
| | | Phosphonate ester compound (wt.-%) | - | 0 | 0 | 0 | 0 | 0 | - | 0 |
| | | NOR-type hindered amine compound (wt.-%) | - | 0 | 0 | 0 | 0 | 0 | - | 0 |
| | Foam layer | Polyolefin resin | PP1 | PP1 | PP2 | PP1 | PP1 | PP2 | PP1 | PP1 |
| | | Phosphonate ester compound (wt.-%) | 11 | 11.3 | 11.3 | 10.3 | 11.8 | 3.1 | 18 | 8.8 |
| | | NOR-type hindered amine compound (wt.-%) | 3.0 | 3.0 | 1.0 | 0.8 | 0.9 | 0 | 3.0 | 1.5 |
| | | Phenolic anti-oxidant (wt.-%) | 0.1 | 0.1 | 0.1 | 0.1 | 0.1 | 0.1 | 0.1 | 0.1 |
| | | Sulfuric anti-oxidant (wt.-%) | 0.1 | 0.1 | 0.1 | 0.1 | 0.1 | 0.1 | 0.1 | 0.1 |
| | | Zinc Borate (wt.-%) | 0.01 | 0.01 | 0.01 | 0.01 | 0.01 | 0.01 | 0.01 | 0.01 |
| | Total phosphonate ester compound (wt.-%) | | 11.0 | 11.0 | 11.0 | 10.0 | 100 | 3.0 | 18.0 | 8.5 |
| | Total NOR-type hindered amine compound (wt.-%) | | 3.0 | 2.9 | 1.0 | 0.8 | 0.8 | 0.0 | 3.0 | 1.5 |
| | Total polyolefin resin (wt.-%) | | 86 | 86 | 88 | 89 | 89 | 97 | 79 | 10 |
| | Weight ratio phenolic antioxidant over NOR compound | | 0.03 | 0.03 | 0.09 | 0.13 | 0.11 | - | 0.03 | 0.07 |
| | Weight ratio sulfuric antioxidant over NOR compound | | 0.03 | 0.03 | 0.09 | 0.13 | 0.11 | - | 0.03 | 0.07 |
| | Phosphorus content (wt.-%) | | 2.7 | 2.7 | 2.7 | 2.4 | 2.4 | 0.7 | 4.4 | 2.1 |
| | Melting point (°C) | | 147 | 147 | 140 | 146 | 147 | 137 | 148 | 148 |

(continued)

| Table 3 | | C1 | C2 | C3 | C4 | C5 | C6 | C7 | C8 |
|---|---|---|---|---|---|---|---|---|---|
| Polyolefin resin foamed particles | Foaming temperature (°C) | 154 | 153 | 149 , | 154 | 152 | 144 | 153 | 154 |
| | Foaming pressure (MPaG) | 0.9 | 1.6 | 1.2 | 1.1 | 1.7 | 2.3 | 0.9 | 0.9 |
| | Liquid dispersing agent | Water | Water | Water | Water | Water | Water | Water | Water |
| | Total time of exposure (Heating + holding) above 80°C (min) | 77 | 72 | 121 | 73 | 72 | 70 | 70 | 72 |
| | High temperature peak (J/g) | 14 | 13 | 14 | 14 | 14 | 14 | 13 | 14 |
| | Density (kg/$m^3$) | 145 | 103 | 139 | 130 | 87 | 60 | 132 | 147 |
| | Humidity after expansion (wt.-%) | 46 | 38 | 28 | 31 | 22 | 15 | 48 | 26 |
| | Total phosphorus content (wt.-%) | 2.4 | 2.3 | 2.4 | 2.1 | 2.1 | 0.6 | 3.7 | 1.8 |
| | $P_{tot}$ | 0.024 | 0.023 | 0.024 | 0.021 | 0.021 | 0.006 | 0.037 | 0.018 |
| | $\{[m215 - m235] / m215\} \times 100/P_{tot}$ | 47 | 44 | 43 | 39 | 40 | 62 | 45 | 41 |

Components molded from the foamed particles according to examples 4 and 11 and comparative examples 4 and 8 have been subjected to an UL94 test evaluation. Example 4 and Comparative example 4, and example 11 and comparative example 8, respectively, have been produced using the same resin polyolefin particles but with different process conditions as shown in the example Tables.

In example 4, three individual specimens out of five were evaluated "V0" according to UL94 standard while none out of five of the individual specimens of the comparative example 4 were evaluated "V0". In example 11, five individual specimens out of five were evaluated "V0" according to UL94 standard while none out of five of the individual specimens of the comparative example 8 were evaluated V0.

Further exemplary aspects of the invention are also apparent from the attached accompanying drawings in which:

Fig. 1 is a principle illustration of an $^{31}$P NMR-analysis performed on resin particles and foamed particles which indicates the presence of altered/degraded phosphonate ester compounds; and

Fig. 2 is a principle illustration of TGA-curves for phosphonate ester compounds before and after altering/degrading.

Fig. 1 is a principle illustration of an $^{31}$P NMR-analysis performed on resin particles (graph 1) and foamed particles (graph 2) which indicates the presence of altered/degraded phosphonate ester compounds due to the fact that the graph illustrating the foamed particles shows a second phosphorus peak. This second peak, which is not present in the graph representing the resin particles before they have undergone a foaming process by application of temperature and/or pressure, in this example in a state-of-the-art autoclave-based process, indicates that respective alteration/degradation processes result in alteration/degradation species. As is apparent from the above comparative examples, the presence of such alteration/degradation species results in that the foamed particles do not satisfy the equation.

Fig. 2 is a principle illustration of TGA-curves in the temperature range between 215°C and 235°C for phosphonate ester compounds before altering/degrading and after altering/degrading. The upper graph refers to an unaltered/undegraded phosphonate ester compound, the lower graph refers to an altered/degraded phosphonate ester compound which shows a different thermal behavior. Particularly, the altered/degraded phosphonate ester compound shows higher thermally induced weight losses which is believed to negatively affect the flame-retarding properties of the unaltered/undegraded phosphonate ester compound.

## Claims

1. Polyolefin-based resin foamed particles, wherein the foamed particles comprise a polyolefin-based resin, the polyolefin-based resin particularly containing polypropylene, and a phosphonate ester compound, wherein a total phosphorus content, P, of the foamed particles ranges from 0.1 to 6% by weight, wherein the foamed particles satisfy the following equation:

$$\{[m_{215} - m_{235}] / m_{215}\} \times 100/P_{tot} \leq 35;$$

wherein

$m_{215}$: is the mass of the foamed particles as measured in a thermogravimetric measurement at 215°C;
$m_{235}$: is the mass of the foamed particles as measured in a thermogravimetric measurement at 235°C; and
$P_{tot}$: is a numerical weight value of the total phosphorus content of the foamed particles ranging between 0.001 to 0.06.

2. The foamed particles of claim 1, wherein the particles contain a NOR-type hindered amine compound, particularly in an amount of 0.1% or more and less than 5% by weight.

3. The foamed particles of claim 2, wherein the amount of polyolefin-based resin is at least 80% by weight.

4. The foamed particles of any one of the preceding claims, wherein the total phosphorus content ranges between 1 and 4.8% by weight.

5. The foamed particles of any one of the preceding claims, further containing a phenolic antioxidant, particularly in an amount between 0.01 and 0.5 weight %.

**6.** The foamed particles of any one of claims 2 - 5, wherein the ratio of the amount of phenolic antioxidant to the amount of NOR-type hindered amine compound in the foamed particles is 0.03 to 0.9.

**7.** The foamed particles of any one of the preceding claims, wherein the phosphonate ester compound is or contains a cyclic phosphonate compound represented by the following general formula (1):

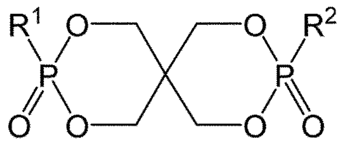

wherein R1 and R2 each represent a hydrocarbon group, particularly wherein R1 and R2 each represent a methyl-group.

**8.** The foamed particles of any one of the preceding claims, further containing a sulfur antioxidant, particularly in an amount between 0.01 and 0.5 weight %, .

**9.** The foamed particles of claim 8, wherein the ratio of the amount of NOR-type hindered amine compound to the amount of sulfur antioxidant is between 0.03 and 0.9.

**10.** A component, molded from the foamed particles of any one of the preceding claims.

**11.** A method for producing polyolefin-based resin foamed particles, comprising the steps of:

providing a component (A) which is or comprises a polyolefin-based resin;
providing a component (B) which is or comprises a phosphonate ester compound,
wherein the method comprises processing a mixture of at least components (A) and (B) and a blowing agent under application of a specific temperature level and/or pressure level for a specific period of time, thereby producing the polyolefin-based resin foamed particles, wherein a total phosphorus content, P, of the foamed particles ranges from 0.1 to 6% by weight, wherein the polyolefin-based resin foamed particles satisfy the following equation:

$$\{[m_{215} - m_{235}] / m_{215}\} \times 100/P_{tot} \leq 35;$$

wherein
$m_{215}$: is the mass of the foamed particles as measured in a thermogravimetric measurement at 215°C;
$m_{235}$: is the mass of the foamed particles as measured in a thermogravimetric measurement at 235°C; and
$P_{tot}$: is a numerical weight value of the total phosphorus content of the foamed particles ranging between 0.001 to 0.06.

**12.** The method of claim 11, wherein processing the mixture of at least components (A) and (B) and a blowing agent under application of a specific temperature level for a specific period of time comprises heating the mixture of at least components (A) and (B) and the blowing agent to a specific foaming temperature of at least 100°C and holding the mixture at this specific foaming temperature level for a specific time, wherein during heating to a specific foaming temperature of at least 100°C and holding the mixture at the specific foaming temperature, the mixture is subject to a temperature of at least 80°C for a time equal to or less than 60 minutes.

**13.** The method of claim 11 or 12, wherein the mixture is processed in a liquid dispersing agent, wherein the liquid dispersing agent is or comprises a non-aqueous liquid; or wherein the mixture is processed without a liquid dispersing agent.

**14.** The method of any one of claims 11 - 13, wherein the amount of phosphonate ester compound in the mixture is between 3 - 20 wt.-%, particularly between 5 and 18 wt.-%, more particularly between 7.5 and 15 wt.-%.

**15.** A method of at least qualitatively determining the flame-retardant behavior of foamed particles according to claim 1, wherein the method comprises providing respective foamed particles and determining, particularly based on respective TGA-measurements and spectroscopy-measurements as specified above, the respective mass of the

foamed particles in a thermogravimetric measurement at 215°C and at 235°C and if a weight value of the total phosphorus content, P, of the foamed particles ranges between 0.1 to 6 %, wherein, if the weight value of the total phosphorus content, P, of the foamed particles ranges between 0.1 to 6 %, the method further comprises determining if the foamed particles satisfy the following equation:

$$\{[m_{215} - m_{235}] / m_{215}\} \times 100/P_{tot} \leq 35;$$

wherein

$m_{215}$: is the mass of the foamed particles measured in the thermogravimetric measurement at 215°C;
$m_{235}$: is the mass of the foamed particles measured in the thermogravimetric measurement at 235°C; and
$P_{tot}$: is a numerical weight value of the total phosphorus content of the foamed particles ranging between 0.001 to 0.06.

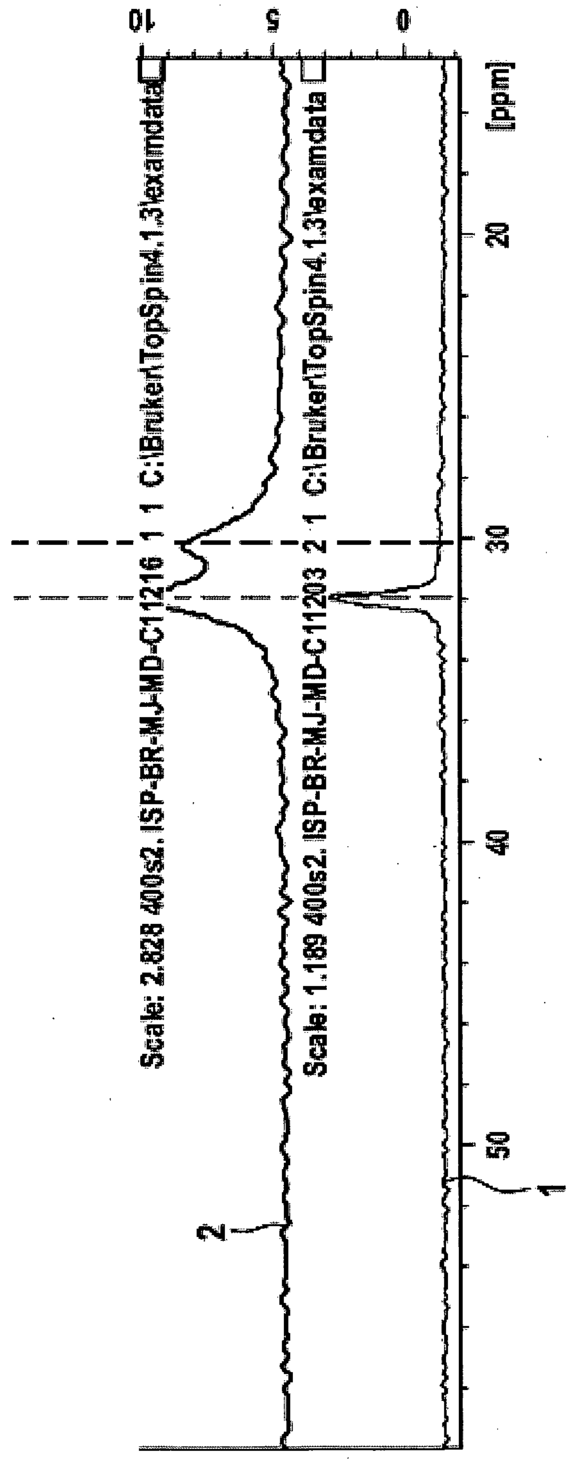
Scale: 2.828 400s2. ISP-BR-MJ-MD-C11216 1 1 C:\Bruker\TopSpin4.1.3\examdata
Scale: 1.189 400s2. ISP-BR-MJ-MD-C11203 2 1 C:\Bruker\TopSpin4.1.3\examdata
10
5
0
[ppm]
20
30
40
50
1
2

Fig. 1

Fig. 2

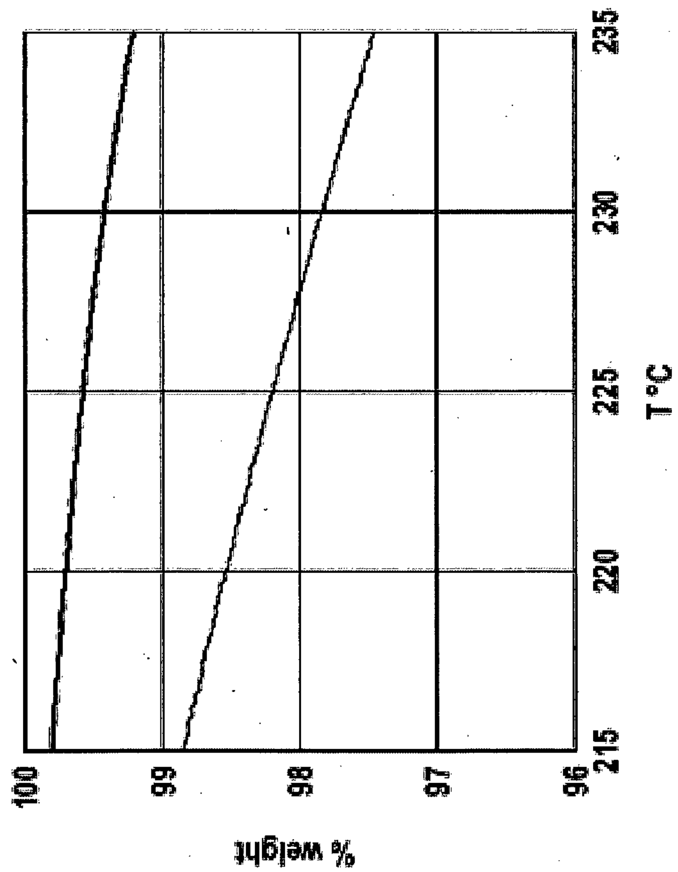

Europäisches Patentamt
European Patent Office
Office européen des brevets

# EUROPEAN SEARCH REPORT

Application Number
EP 23 31 5445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2022/203035 A1 (KANEKA CORP [JP]) 29 September 2022 (2022-09-29)<br>* paragraphs [0177] - [0180]; example 1 *<br>* examples 2-19; table 1 *<br>* claims *<br>& EP 4 317 288 A1 (KANEKA CORP [JP]) 7 February 2024 (2024-02-07)<br>----- | 1-14<br>15 | INV.<br>C08J9/00<br>C08J9/12<br>C08J9/18 |
| A | EP 3 202 834 A1 (KANEKA BELGIUM NV [BE]; KANEKA CORP [JP]) 9 August 2017 (2017-08-09)<br>* examples *<br>----- | 1-15 | |
| | | | TECHNICAL FIELDS SEARCHED (IPC) |
| | | | C08J<br>C08K |

The present search report has been drawn up for all claims

1

| Place of search | Date of completion of the search | Examiner |
|---|---|---|
| The Hague | 23 April 2024 | Schlicke, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 31 5445

This annex lists the patent family members relating to the patent documents cited in the above-mentioned European search report. The members are as contained in the European Patent Office EDP file on
The European Patent Office is in no way liable for these particulars which are merely given for the purpose of information.

23-04-2024

| Patent document cited in search report | Publication date | Patent family member(s) | Publication date |
|---|---|---|---|
| WO 2022203035 A1 | 29-09-2022 | CN 117083324 A | 17-11-2023 |
| | | EP 4317288 A1 | 07-02-2024 |
| | | JP WO2022203035 A1 | 29-09-2022 |
| | | WO 2022203035 A1 | 29-09-2022 |
| EP 3202834 A1 | 09-08-2017 | CN 107148441 A | 08-09-2017 |
| | | EP 3202834 A1 | 09-08-2017 |
| | | JP 6630674 B2 | 15-01-2020 |
| | | JP WO2016052739 A1 | 20-07-2017 |
| | | PL 3202834 T3 | 30-04-2020 |
| | | US 2017204240 A1 | 20-07-2017 |
| | | WO 2016052739 A1 | 07-04-2016 |

EPO FORM P0459

For more details about this annex : see Official Journal of the European Patent Office, No. 12/82